# EUROPÄISCHE PATENTSCHRIFT

(11) **EP 3 071 035 B1**
(45) Veröffentlichungstag und Bekanntmachung des Hinweises auf die Patenterteilung: **21.02.2018**
(21) Anmeldenummer: 14800087.0
(22) Anmeldetag: 21.11.2014
(51) Int. Cl.: A01N 37/42, A01N 25/14

(54) **WIRBELSCHICHT-GRANULIERUNG MIT WÄSSRIGEN LÖSUNGEN VON PROHEXADION-CALCIUM UND ANORGANISCHEM SULFAT**
FLUIDISED BED GRANULATION WITH AQUEOUS SOLUTIONS OF PROHEXADIONE CALCIUM AND INORGANIC SULPHATE
GRANULATION DE LIT FLUIDISÉ COMPRENANT DES SOLUTIONS AQUEUSES DE PROHEXADIONE-CALCIUM ET DE SULFATE ANORGANIQUE

(30) Priorität: 22.11.2013 EP 13194068
(43) Veröffentlichungstag der Anmeldung: 28.09.2016
(73) Patentinhaber: BASF SE, 67056 Ludwigshafen am Rhein (DE)
(72) Erfinder: KOLB, Klaus, 67105 Schifferstadt (DE); NITSCHE, Martina, 67459 Boehl-Iggelheim (DE); GREGORI, Wolfgang, 67067 Ludwigshafen (DE); HILL, Friedrich, 67149 Meckenheim (DE)
(86) Internationale Anmeldenummer: PCT/EP2014/075232
(87) Internationale Veröffentlichungsnummer: WO 2015/075167

(56) Entgegenhaltungen:
- EP-A1- 0 598 404
- WO-A1-2011/012495
- WO-A1-2011/051205

## Beschreibung

### TECHNISCHES GEBIET DER ERFINDUNG

Gegenstand der vorliegenden Erfindung ist ein Verfahren zur Herstellung eines Granulats enthaltend Prohexadion-Calcium und ein anorganisches Sulfat umfassend die Wirbelschichtgranulierung einer wässrigen Dispersion umfassend Prohexadion-Calcium und einer wässrigen Lösung umfassend mindestens ein anorganisches Sulfat. Die Erfindung betrifft weiterhin ein homogenes Granulat umfassend ein anorganisches Sulfat und Prohexadion-Calcium, wobei das anorganische Sulfat und das Prohexadion-Calcium gleichmäßig im Granulat verteilt sind. Darüber hinaus betrifft die vorliegende Erfindung die Verwendung des homogenen Granulats zur Regulierung des Wachstums von Pflanze insbesondere in Form einer Spritzbrühe.

### HINTERGRUND

Prohexadion-Calcium (Calcium-3-oxido-5-oxo-4-Propionyl-Cyclohexan-Carboxylat) ist ein Cyclohexan-Derivat, das als Pflanzenwachstumsregulator wirkt. Prohexadion-Calcium hemmt bestimmte Schritte der Gibberellin-Biosynthese wodurch der Gehalt an wachstumsaktiven Gibberellinen vermindert wird, was bei den behandelten Pflanzen zu einem reduzierten Spross-Längenwachstum führt. Weiterhin werden bestimmte sekundäre Stoffwechselprozesse der Pflanze positiv beeinflusst. Der Einsatz von Prohexadion-Calcium ist insbesondere zur Bekämpfung von Feuerbrand, zur Reduzierung der Anfälligkeit gegenüber sekundärem Feuerbrand der Blüte, zur Bekämpfung von bakteriellen Blattfleckenerregern sowie zur Lockerung des Traubenstielgerüstes an Weinreben beschrieben worden. Weiterhin sind Formulierungen von Prohexadion-Calcium und deren Herstellungsverfahren aus der Literatur bekannt.

So offenbart EP 0 598 404 eine Zusammensetzung umfassend einen Pflanzenwachstumsregulator aus der Gruppe der Cyclohexanderivate und eine Stickstoffhaltige, wasserlösliche anorganische Verbindung oder Harnstoff. Die Stickstoff-haltige Verbindung kann beispielsweise Ammoniumsulfat sein. Die beschriebene Zusammensetzung wurde hier als granuläres, benetzbaren Pulvers charakterisiert.

Weiterhin offenbart WO 2007/042404 eine fungizide und bioregulatorische Mischung enthaltend Epoxiconazol und Prohexadion-Calcium in einer synergistisch wirksamen Menge. Als geeignete Formulierungen sind hier Granulate genannt, wobei als fester Trägerstoff unter anderem Ammoniumsulfat eingesetzt werden.

Prohexadion-Calcium-Formulierungen werden vom Anwender üblicherweise versprüht, wobei eine applizierbare Lösung oder Suspension durch starkes Verdünnen mit Wasser (z.B. Leitungswasser oder Brunnenwasser) hergestellt wird. Dabei kann die Aufnahme von Prohexadion-Calcium dadurch verbessert werden, dass bei hartem Wasser Ammoniumsulfat zugegeben werden. So hat sich die Zugabe von 1 bis 2 kg Ammoniumsulfat pro 1000 I Wasser bei sehr starkem Kalkgehalt im Wasser bewährt. Darüber hinaus sind auch Suspensionskonzentrate von Prohexadion-Calcium kommerziell erhältlich (beispielsweise Medax Top® mit Turbo von BASF SE), die bereits in kombinierter Verpackung das Suspensionskonzentrat und getrennt davon Ammoniumsulfat enthalten.

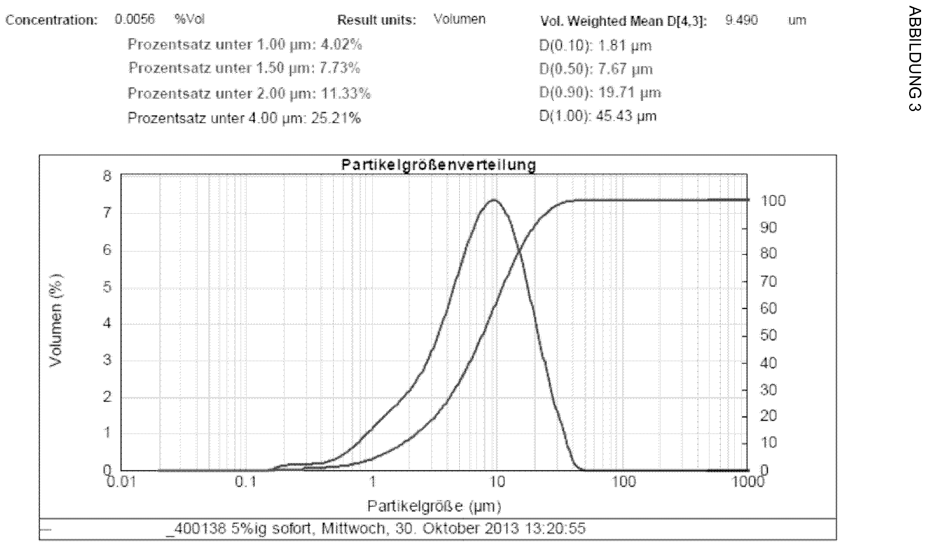

Dieses Vorgehen ist jedoch dadurch eingeschränkt, dass Sulfate in Verbindung mit Calciumsalzen (wie aus Prohexadion-Calcium) in wässrigem Medium Calciumsulfat-Hydrat Ausfällungen (d.h. Gips) bilden können (siehe auch Abb. 3 bis 5). Dadurch wird die Sprühaufbringung der Prohexadion-Calcium-Formulierungen stark erschwert bzw. unmöglich gemacht.

Eine Lösung für dieses Problem ist im Stand der Technik bereits in der WO 2011/012495 beschrieben, in welcher ein Verfahren zur Herstellung von Prohexadion-Calcium haltigen Formulierungen, welche hohe Mengen an Sulfaten enthalten und auch bei Verdünnen mit hartem Wasser eine Suspension mit hoher biologischer Wirksamkeit ergeben sollten, dargestellt ist. Dieses Verfahren sieht eine Wirbelschichtgranulierung einer wässrigen Prohexadion-Calcium Dispersion und eines getrennt einzubringenden, nicht-flüssig vorliegenden anorganischen Sulfats (typischerweise ein Sulfat-Pulver) vor. Das dabei erzeugte Granulat hat eine Partikelform mit anorganischem Sulfatkern, sowie einer Prohexadion-Calcium Hüllschicht. Die in diesem Herstellungsverfahren erzeugten Partikel zeigen jedoch keine vollständig homogene Verteilung von Prohexadion-Calcium und Sulfat und das erzeugte Granulat weist eine sub-optimale Löslichkeit in wässrigen Suspensionen insbesondere bei niedrigen Temperaturen auf.

Aufgabe der vorliegenden Erfindung war es deshalb, ein verbessertes Verfahren zur Herstellung eines Granulates bestehend aus Prohexadion-Calcium und einem anorganischen Sulfat bereitzustellen, wobei die durch dieses Verfahren erzeugten Partikel eine gleichmäßige Verteilung von Prohexadion-Calcium und Sulfat aufweisen, sowie eine schnellere Löslichkeit insbesondere bei niedrigen Temperaturen zeigen sollten.

Die WO 2011/051205 A1 beschreibt ein Verfahren, bei dem eine Sprühflüssigkeit, die das Pestizid Boscalid und Ammoniumsulfat enthält, in einen Strahlschichtapparat eingebracht und granuliert wird, wobei als alternatives Pestizid Prohexadion-Ca genannt wird.

### GEGENSTAND UND ZUSAMMENFASSUNG DER ERFINDUNG

Die vorliegende Erfindung löst dieses technische Problem durch ein Verfahren zur Herstellung eines Granulats enthaltend Prohexadion-Calcium und ein anorganisches Sulfat, wobei das Verfahren die Wirbelschichtgranulierung einer wässrigen Dispersion umfassend Prohexadion-Calcium und einer wässrigen Lösung umfassend mindestens ein anorganisches Sulfat umfasst. Durch dieses Verfahren ist es möglich, auf die Verwendung von nicht-flüssigem Sulfat, d.h. insbesondere pulver-förmigem Sulfat während der Wirbelschichtgranulierung zu verzichten. Die typischerweise zu erwartende Bildung von unlöslichen Niederschlägen (Gips) durch den Gebrauch von wässrigen Calcium- und Sulfat-Lösungen bleibt beim erfindungsgemäßen Verfahren überraschenderweise aus. Dies könnte auf die sehr schnelle Verdunstung von Dispersionswasser während der Einbringung der wässrigen Dispersion bzw. Sulfatlösung zurückzuführen sein. Das erfindungsgemäße Verfahren erlaubt es dabei, ein homogenes Granulat mit gleichmäßiger Verteilung von Prohexadion-Calcium und Sulfaten zu erreichen. Die erzeugten Granulate weisen deshalb nicht die aus dem Stand der Technik bekannte Struktur eines Sulfatkerns mit Prohexadion-Calcium Ummantelung auf, sondern haben eine poröse Matrixstruktur, die keinen Sulfat-Kern besitzt. Darüber hinaus ist es möglich, das Herstellungsverfahren kontinuierlich durchzuführen, was eine erhebliche Verfahrenserleichterung und in der Regel größere Durchsätze im Vergleich zum herkömmlichen Batch-Verfahren darstellt. Durch die Matrixstruktur des Granulats und die vorhandenen Poren in dieser Struktur ist es möglich, die Löslichkeit des Granulates in Wasser, insbesondere in relativ hartem Wasser und vor allem in Wasser mit niedriger Temperatur, z. B. unter 10°C, insbesondere bei ca. 5°C, zur Herstellung einer Sprühsuspension deutlich zu steigern, da das Wasser durch die Porenstruktur das Granulat leicht und schnell benetzen kann.

In einer bevorzugten Ausführungsform des erfindungsgemäßen Verfahrens werden die Prohexadion-Calcium Dispersion und die Lösung des anorganischen Sulfats getrennt in eine Wirbelschichtkammer eingebracht.

In einer weiteren, bevorzugten Ausführungsform des erfindungsgemäßen Verfahrens wird die Prohexadion-Calcium Dispersion und die Lösung des anorganischen Sulfats gleichzeitig in eine Wirbelschichtkammer eingebracht.

Weiterhin bevorzugt ist, dass die Prohexadion-Calcium Dispersion höchstens 5 Gew. % anorganisches Sulfat enthält.

In einer besonders bevorzugten Ausführungsform des erfindungsgemäßen Verfahrens ist das anorganische Sulfat ein Ammoniumsulfat oder ein Hydrogensulfat, beispielsweise Natriumhydrogensulfat oder Kaliumhydrogensulfat.

Die Erfindung bezieht sich in einem weiteren Aspekt auf ein homogenes Granulat umfassend anorganisches Sulfat und Prohexadion-Calcium, wobei das anorganische Sulfat und das Prohexadion-Calcium gleichmäßig im Granulat verteilt sind und das Granulat vorzugsweise eine poröse Matrixstruktur aufweist.

In einer bevorzugten Ausführungsform des homogenen Granulats ist das anorganische Sulfat ein Ammoniumsulfat oder ein Hydrogensulfat ist, beispielsweise Natriumhydrogensulfat oder Kaliumhydrogensulfat.

In einer weiteren bevorzugten Ausführungsform umfasst das erfindungsgemäße homogene Granulat ein weiteres Pestizid.

In einer weiteren bevorzugten Ausführungsform ist das Pestizid ein Wachstumsregulator.

Darüber hinaus umfasst die vorliegende Erfindung homogene Granulate wie oben beschrieben, welche zusätzlich ein Säuerungsmittel enthalten.

In einer besonders bevorzugten Ausführungsform umfasst das erfindungsgemäße Granulat 1 bis 30 Gew. % Prohexadion-Calcium, 10 bis 60 Gew. % Ammoniumsulfat, optional 1 bis 50 Gew. % weiteres Pestizid, und ad 100 Gew. % Formulierungshilfsmittel, sowie optional ein Säuerungsmittel.

In einer zusätzlichen Ausführungsform bezieht sich die Erfindung auf ein Granulat das durch ein Verfahren wie oben beschrieben erhältlich ist.

Die Erfindung bezieht sich in einem weiteren Aspekt auf die Verwendung des homogenen Granulats wie oben beschrieben oder hergestellt nach einem der oben beschriebenen Verfahren zur Herstellung einer Spritzbrühe.

Darüber hinaus bezieht sich die Erfindung auf die Verwendung des homogenen Granulats wie oben beschrieben oder hergestellt nach einem der oben beschriebenen Verfahren zur Regulierung des Wachstums von Pflanzen, sowie optional zusätzlich zur Steigerung der Pflanzengesundheit oder der Bekämpfung von pflanzlichen Bakterien- oder Pilzinfektionen.

### ABBILDUNGEN

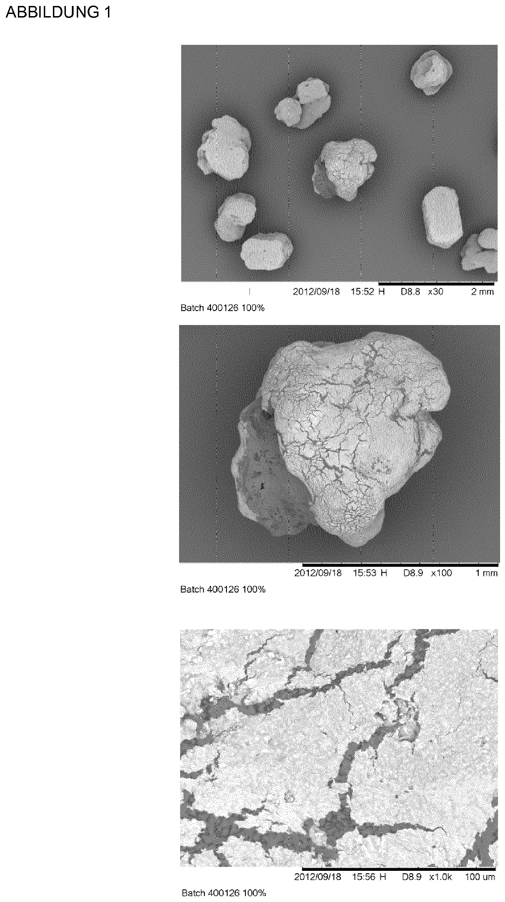

**Abb. 1** zeigt Partikel mit Sulfatkern und Prohexadion-Calcium-Ummantelung, welche nach dem Verfahren aus dem Stand der Technik (WO 2011/012495) erzeugt wurden. Im oberen Bild sind die Partikel in einem Größenmaßstab von 2 mm, darunter in einem Größenmaßstab von 1 mm und im unteren Bild in einem Größenmaßstab von 100 µm gezeigt.

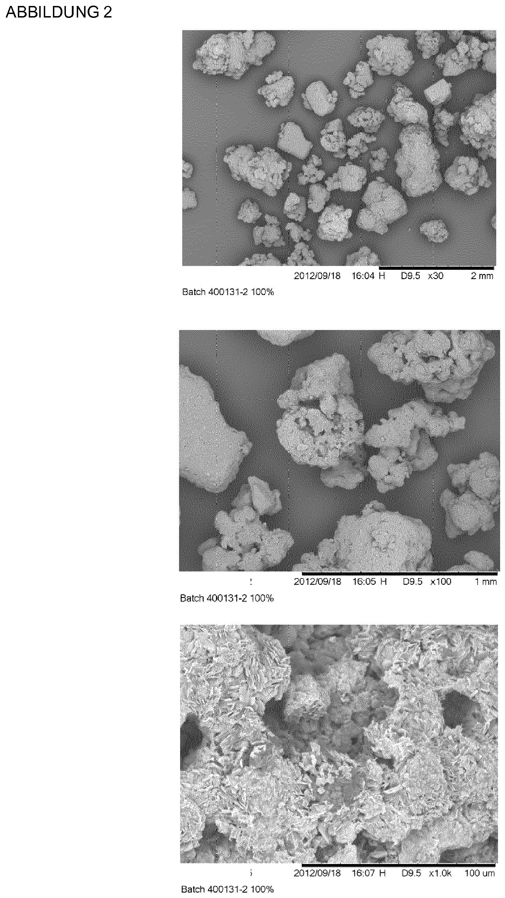

**Abb. 2** zeigt ein homogenes Sulfat / Prohexadion-Calcium Granulat mit einer porösen Matrixstruktur, welches nach dem erfindungsgemäßen Verfahren hergestellt wurde. Im oberen Bild sind die Partikel in einem Größenmaßstab von 2 mm, darunter in einem Größenmaßstab von 1 mm und im unteren Bild in einem Größenmaßstab von 100 µm gezeigt.

**Abb. 3** zeigt Ergebnisse von Untersuchungen zur Partikelbildung mit wässrigen 5%igen Prohexadion-Calcium / Sulfat Mischungen unmittelbar nach der Mischung der Bestandteile. Es zeigt sich, dass die Partikelbildung sofort einsetzt.

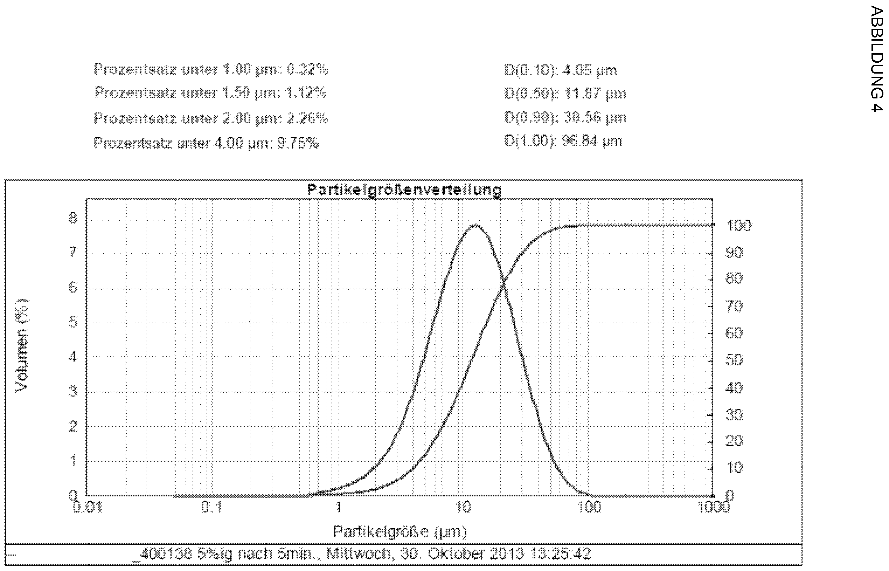

**Abb. 4** zeigt Ergebnisse von Untersuchungen zur Partikelbildung mit wässrigen 5%igen Prohexadion-Calcium / Sulfat Mischungen 5 Minuten nach der Mischung der Bestandteile. Es zeigt sich, dass sich die Partikelbildung fortgesetzt hat. Weiterhin ist die durchschnittliche Partikelgröße angestiegen.

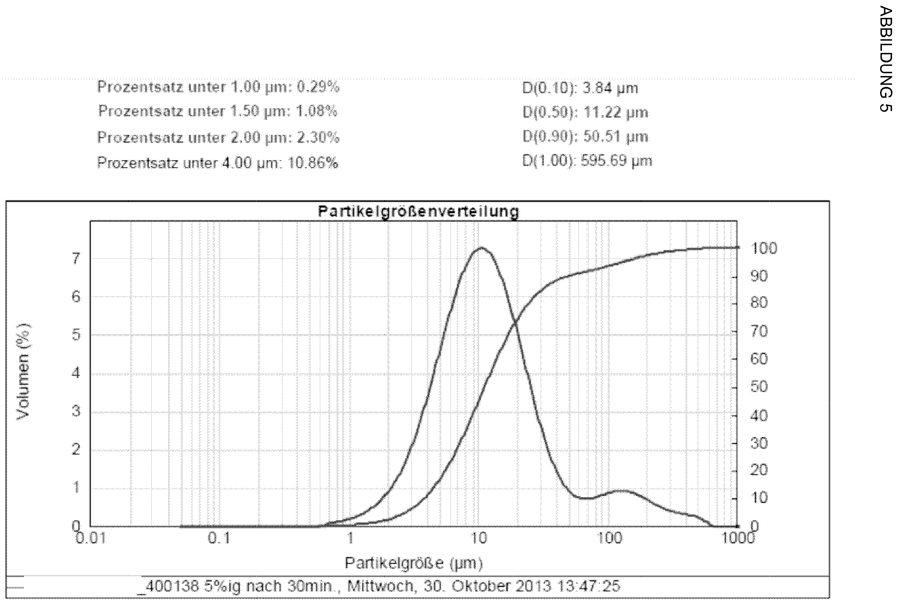

**Abb. 5** zeigt Ergebnisse von Untersuchungen zur Partikelbildung mit wässrigen 5%igen Prohexadion-Calcium / Sulfat Mischungen 30 Minuten nach der Mischung der Bestandteile. Es zeigt sich, dass sich die Partikelbildung fortgesetzt hat. Weiterhin ist die durchschnittliche Partikelgröße stark angestiegen.

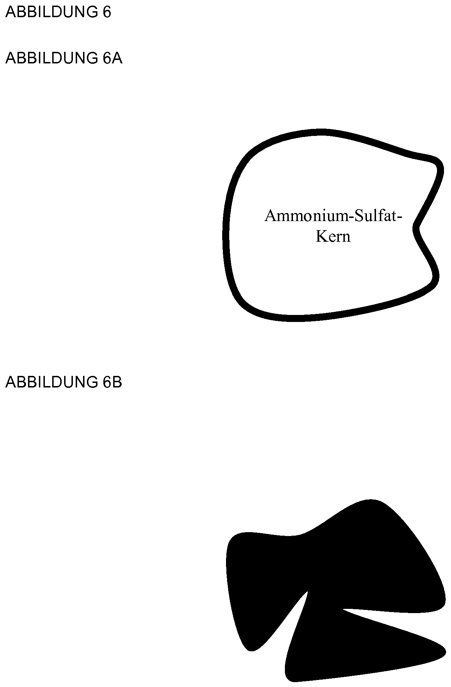

**Abb. 6** zeigt einen Vergleich der Partikelstruktur welche sich aus dem herkömmlichen Herstellungsverfahren im Stand der Technik (A) und dem erfindungsgemäßen Verfahren (B) ergibt. In **Abb. 6A** kann man den Kern / Schale-Aufbau des herkömmlichen Granulats erkennen, d.h. hier wurden Inhaltsstoffe auf einen Ammoniumsulfat-Kern gecoatet. Der Geschwindigkeits-bestimmende Schritt für die Auflösung des Partikels in Wasser ist dabei der kompakte Ammoniumsulfat-Kern (die Auflösung kann dabei unter ungünstigen Bedingungen (z.B. kaltes Wasser, wenig Rührbewegung) verzögert sein). In **Abb. 6B** ist die Matrix-Struktur mit Poren bei gleichmäßiger Verteilung der Inhaltsstoffe schematisch dargestellt. Hier kann das Wasser durch den porösen Aufbau schneller alle Bereiche benetzen, was die Dispergierbarkeit insbesondere bei niedrigen Temperaturen signifikant steigert.

### AUSFÜHRLICHE BESCHREIBUNG DER ERFINDUNG

Die vorliegende Erfindung bezieht sich auf ein Verfahren zur Herstellung eines Granulats enthaltend Prohexadion-Calcium und ein anorganisches Sulfat, wobei das Verfahren die Wirbelschichtgranulierung einer wässrigen Dispersion umfassend Prohexadion-Calcium und einer wässrigen Lösung umfassend mindestens ein anorganisches Sulfat umfasst.

Die Erfindung wird im Folgenden anhand spezifischer Ausführungsformen beschrieben, ist jedoch nicht auf diese Ausführungsformen beschränkt.
Im Folgenden werden einige der für das Verständnis der Erfindung wichtigen Begriffe erklärt. Das im Rahmen der folgenden Ausführungsformen und der Ansprüche verwendete Wort "ein" im Singular umfasst ebenfalls Puralformen, es sei denn eine spezifische Definition weicht davon ab. Weiterhin bezieht sich der Begriff "etwa" bzw. "ungefähr" auf Genauigkeitsintervalle, welche der Fachmann dahingehend versteht, dass innerhalb dieser Intervalle noch der technische Effekt der Erfindung erreicht wird. Typischerweise bezeichnen diese Begriffe eine Abweichung vom angegebenen Wert um ±20 %, vorzugsweise um ±15 %, weiter bevorzugt um ±10 %, in der bevorzugtesten Form um ±5 %. Weiterhin sind die Begriffe "umfassend" und "enthaltend" als nicht einschränkend zu verstehen. Der Begriff "bestehend aus" ist als bevorzugte Ausführungsform des Begriffes "umfassend" bzw. "enthaltend" zu verstehen. Sollte im Folgenden eine Gruppe definiert sein, die eine gewisse Menge an Ausführungsformen umfasst, ist damit ebenfalls gemeint, dass diese Gruppe ebenfalls bevorzugt aus diesen Ausführungsformen besteht.

Die Begriffe "erstens" oder "erster", "zweitens" oder "zweiter", "drittens" oder "dritter", "(a)", "(b)", "(c)", "(d)" etc. in der Beschreibung und den Ansprüchen werden verwendet, um zwischen ähnlichen Elementen zu unterscheiben, jedoch nicht notwendigerweise um eine Reihenfolge oder zeitliche Abfolge festzulegen. Die entsprechenden Elemente können so unter geeigneten Bedingungen austauschbar sein. Die Ausführungsformen, welche diese Elemente enthalten, können somit ebenfalls in einer Reihenfolge ausführt werden, welche nicht der genannten Reihenfolge der Elemente entspricht, es sei denn spezifische Definitionen schreiben etwas anderes vor.

Sollten sich die Begriffe "erstens" oder "erster", "zweitens" oder "zweiter", "drittens" oder "dritter", "(a)", "(b)", "(c)", "(d)" etc. auf Verfahrensschritte beziehen oder Verwendungsschritte etc. bezeichnen, gibt es keinen vorgeschriebenen zeitlichen Zusammenhang zwischen diesen Schritten. D.h., die Schritte können gleichzeitig ausgeführt werden, oder es kann Zeitintervalle von Sekunden, Minuten, Stunden, Tagen, Wochen, oder Jahren zwischen den Schritten geben, es sei denn eine Definition in der Beschreibung schreibt spezifische Intervalle vor.

Darüber hinaus ist die Erfindung nicht auf die spezifischen Ansätze, Protokolle, Reagenzien etc. wie nachfolgend beschrieben eingeschränkt, da diese sich ggf. ändern können. Weiterhin soll die im Weiteren verwendete Terminologie nur zur Beschreibung der Ausführungsformen gelten, nicht jedoch den Schutzumfang der Erfindung einschränken, da dieser nur durch die beigefügten Ansprüche definiert ist. Soweit nicht anders definiert, haben alle technischen und wissenschaftlichen Begriffe welche in dieser Beschreibung verwendet werden die Bedeutung, welchen ihnen der Durchschnittsfachmann gewöhnlich beimisst.

Wie oben ausgeführt, bezieht sich die vorliegende Erfindung in einem Aspekt auf ein Verfahren zur Herstellung eines Granulats enthaltend Prohexadion-Calcium und ein anorganisches Sulfat, wobei das Verfahren die Wirbelschichtgranulierung einer wässrigen Dispersion umfassend Prohexadion-Calcium und einer wässrigen Lösung umfassend mindestens ein anorganisches Sulfat umfasst.

Die Wirbelschichtgranulation ist ein gut untersuchtes Verfahren zur Herstellung von Granulaten. Geeignete Anlagen und Betriebsweisen sind beispielsweise von Rosch und Probst, Verfahrenstechnik 1975 (9), 59-64 oder in EP 0 799 569 beschrieben worden. Eine bevorzugte Anlage wird von der Firma DMA Prozesstechnologie als WFP-Koni Multifunktionsanlage vertrieben (http://www.dmr-prozess.com/).

Ein Wirbelschichtgranulator umfasst üblicherweise eine Wirbelkammer mit einem Siebboden aus einem Lochblech. Dabei fließt beheizbares Wirbelgas mit einer bestimmten Eingangstemperatur und Fließgeschwindigkeit durch den Siebboden in die Wirbelkammer. Mittels einer Düse können Flüssigkeiten oder Dispersionen in die Wirbelkammer eingesprüht werden.

Bei dem erfindungsgemäßen Verfahren umfassend die Wirbelschichtgranulierung einer wässrigen Dispersion enthaltend Prohexadion-Calcium und einer wässrigen Lösung umfassend mindestens ein anorganisches Sulfat werden die Dispersion und die Lösung üblicherweise in eine Wirbelschichtkammer eingebracht. Das Einbringen erfolgt meist durch Versprühen der Dispersion und der Lösung in ein Wirbelbett.

Dabei wird die Dispersion und die Lösung meist über zwei oder mehrere Düsen, beispielsweise Zwei- oder Dreistoffdüsen, versprüht. Bevorzugt wird die Dispersion über Zweistoffdüsen mit einem inerten Gas, wie Druckluft oder Stickstoff, bei einem Druck von 1,2 bis 5,0 bar und einer Bett-Temperatur von 15 bis 100°C getrocknet.

Üblicherweise ist die Düse in einem Abstand vom Siebboden angebracht, welcher dem 1,5- bis 10-fachen, insbesondere dem 2- bis 8-fachen, der Schichthöhe der ruhenden Wirbelbettfüllung entspricht. Ist die Düse zu nahe über der Wirbelschicht oder taucht die Düse in die Wirbelschicht ein, so treten starke Verklumpungen auf und das Wirbelbett bricht zusammen. Ist der Abstand der Düse zum Wirbelbett zu groß, so haben die fein verdüsten Partikel Zeit zum Antrocknen, so dass man im Allgemeinen ein Pulver und kein Granulat, zumindest aber ein Produkt mit einem hohen Staubanteil erhält.

Das erfindungsgemäße Verfahren kann kontinuierlich oder batchweise durchgeführt werden. Die Vorteile des Verfahrens bestehen insbesondere darin, dass im Vergleich zu Alternativverfahren eine kontinuierliche Durchführung möglich ist. Diese kontinuierliche Durchführung ist bevorzugt.

Bevorzugt wird die wässrige Dispersion umfassend Prohexadion-Calcium und die wässrige Lösung umfassend mindestens ein anorganisches Sulfat getrennt in eine Wirbelschichtkammer eingebracht. Die wässrige Dispersion umfassend Prohexadion-Calcium und die wässrige Lösung umfassend mindestens ein anorganisches Sulfat können gleichzeitig oder nacheinander, oder in einer abwechselnden Taktung in die Wirbelschichtkammer eingebracht werden. Es ist bevorzugt, dass die wässrige Dispersion umfassend Prohexadion-Calcium und die wässrige Lösung umfassend mindestens ein anorganisches Sulfat gleichzeitig in die Wirbelschichtkammern eingesprüht werden.

Üblicherweise fließt beheizbares Wirbelgas, wie Luft, durch den Siebboden in die Wirbelschichtkammer. Die Eingangstemperatur des Wirbelgases beträgt meist von 50 bis 220 °C, bevorzugt von 70 bis 150 °C und insbesondere von 90 bis 120 °C. In einer weiteren Ausführungsform liegt die Eingangstemperatur unter 130 °C, bevorzugt unter 120 °C, insbesondere unter 115 °C.

Die Wirbelgasmenge pro Quadratmeter Anströmfläche des Wirbelbodens kann von 3.000 bis 20.000 m³/h, bevorzugt von 6.000 bis 18.000 m³/h und insbesondere 9.000 bis 14.000 m³/h betragen. Es kann mit einer Wirbelbettfüllung von 50 bis 2000 kg/m² Fläche des Anströmbodens, vorzugsweise 100 bis 1000 kg/m² gearbeitet werden. Mit Wirbelbettfüllung ist bei kontinuierlicher Verfahrensführung der "hold up" und beim Batch-Verfahren die Batchgröße d.h. die Füllmenge bei Granulationsende gemeint.

Die mit dem Abgas aus dem Wirbelbett entweichenden Feingutanteile werden in üblicher Weise abgeschieden. Sie können als Keime für die Granulatbildung in das Wirbelbett zurückgeführt werden. Dabei ist sowohl eine interne als auch eine externe Feingutrückführung möglich. Für die Abscheidung der Feingutanteile und deren Rückführung können alle üblicherweise für derartige Zwecke eingesetzten Apparate verwendet werden. Das fertige Granulat kann über eine oder mehrere geeignete Vorrichtungen ausgetragen werden. Hierfür kommen alle üblichen Vorrichtungen in Betracht, beispielsweise Gegenstrom-Schwerkraft-Sichter, Zick-Zack-Sichter oder Austrag über eine Klappe.

Die wässrige Dispersion umfassend Prohexadion-Calcium enthält meist 0,5 bis 55 Gew. %, bevorzugt 2 bis 45 Gew. %, 3 bis 40 Gew. %, 5 bis 40 Gew. % und insbesondere 10 bis 35 Gew.% Prohexadion-Calcium (CAS-Nr. 127277-53-6). Die Erfindung sieht in alternativen Ausführungsformen ebenfalls die Verwendung einer wässrigen Dispersion umfassend Prohexadion-Calcium mit 5 bis 15 Gew.% Prohexadion-Calcium (CAS-Nr. 127277-53-6) vor. Besonders bevorzugt ist die Verwendung einer wässrigen Dispersion umfassend Prohexadion-Calcium mit ca. 35 Gew. % Prohexadion-Calcium (CAS-Nr. 127277-53-6).

Neben dem Prohexadion-Calcium (CAS-Nr. 127277-53-6) kann die wässrige Dispersion umfassend Prohexadion-Calcium weitere Stoffe enthalten. So kann die Dispersion beispielsweise anorganisches Sulfat enthalten. Vorzugsweise enthält die wässrige Dispersion umfassend Prohexadion-Calcium höchstens 5 Gew. %, bevorzugt höchstens 0,5 Gew. % und insbesondere höchstens 0,05 Gew. % anorganisches Sulfat.

Die Prohexadion-Calcium Dispersion kann als Emulsion oder Suspension vorliegen. Bevorzugt ist die Dispersion einer Suspension, beispielsweise eine Suspension von Prohexadion-Calcium.

Die Prohexadion-Calcium Dispersion kann in bestimmen Ausführungsformen neben Prohexadion-Calcium weitere, wie ein oder zwei oder mehr, Pestizide enthalten. Aufgrund unterschiedlicher physiko-chemischer Eigenschaften von Pestiziden oder Pestizidklassen kann es notwendig werden, Prohexadion-Calcium Dispersionen mit Pestiziden auf unterschiedliche, zum Beispiel auf die Pestizide oder Pestizidklassen bzw. deren physiko-chemische Eigenschaften abgestimmte, Weise herzustellen. Diese Verfahren können beispielsweise einem flüssigen, ölförmigen oder harzförmigen Charakter der Pestizide Rechnung tragen. Die Verfahrensanpassung kann dabei beispielsweise die Einführung weiterer Verfahrensschritte umfassen, etwa eines Emulgierungsschrittes oder ähnliches. Bei biologischen Pilzbekämpfungsmitteln oder Pflanzenstärkungsmitteln oder hitzeempfindlichen Pestiziden können die Temperaturen der Wirbelschicht-Granulierung beispielsweise angepasst, d.h. auf einen für die Organismen oder Stoffe unschädlichen Wert abgesenkt werden. Alternativ, können hitzeabsorbierende Komponenten zugefügt werden, um eine Beschädigung der Organismen zu verhindern. Weiterhin können die biologischen oder hitzeempfindlichen Pestizide nachträglich zugegeben oder abgemischt werden. Details solcher Verfahren und deren Anwendung auf die hierein genannten Pestizide oder Pestizidklassen sind dem Fachmann bekannt und können aus Standardpublikationen in diesem Bereich, entnommen werden.

Der Begriff "Pestizid" bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide, Herbizide, und Wachstumsregulatoren. Besonders bevorzugte Pestizide sind Wachstumsregulatoren. Auch Mischungen von Pestiziden aus zwei oder mehr der vorgenannten Klassen können verwendet werden. Der Fachmann ist vertraut mit solchen Pestiziden, die beispielsweise in Pesticide Manual, 15th Ed. (2009), The British Crop Protection Council, London, gefunden werden können.

Die folgende Liste von Pestiziden soll die Kombinationsmöglichkeiten erläutern, nicht aber einschränken:

### A) Strobilurine:

Azoxystrobin, Dimoxystrobin, Coumoxystrobin, Coumethoxystrobin, Enestroburin, Fluoxastrobin, Kresoxim-methyl, Metominostrobin, Orysastrobin, Picoxystrobin, Pyraclostrobin, Pyrametostrobin, Pyraoxystrobin, Pyribencarb, Trifloxystrobin, 2-[2-(2,5- Dimethylphenyl-oxymethyl)phenyl]-3-methoxy-acrylsäuremethylester, 2-(2-(3-(2,6-dichlorphenyl)-1-methyl-allylideneaminooxymethyl)-phenyl)-2-methoxyimino-N-methyl-acetamide;

### B) Carbonsäureamide:

- Carbonsäureanilide: Benalaxyl, Benalaxyl-M, Benodanil, Bixafen, Boscalid, Carboxin, Fenfuram, Fenhexamid, Flutolanil, Fluxapyroxad, Furametpyr, Isopyrazam, Isotianil, Kiralaxyl, Mepronil, Metalaxyl, Metalaxyl-M (Mefenoxam), Ofurace, Oxadixyl, Oxycarboxin, Penflufen, Penthiopyrad, Sedaxane, Tecloftalam, Thifluzamide, Tiadinil, 2-Amino-4-methyl-thiazol-5-carboxanilid, N-(4'-Trifluormethylthiobiphenyl-2-yl)-3-difluormethyl-1-methyl-1H-pyrazol-4-carboxamid, N-(2-(1,3,3-Trimethyl-butyl)phenyl)-1,3-dimethyl-5-fluor-1H-pyrazol-4-carboxamid;
- Carbonsäuremorpholide: Dimethomorph, Flumorph, Pyrimorph;
- Benzoesäureamide: Flumetover, Fluopicolide, Fluopyram, Zoxamid;
- Sonstige Carbonsäureamide: Carpropamid, Diclocymet, Mandipropamid, Oxytetracyclin, Silthiofam, N-(6-methoxy-pyridin-3-yl)cyclopropancarbonsäureamid;

### C) Azole:

- Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol;
- Imidazole: Cyazofamid, Imazalil, Imazalilsulfat, Pefurazoat, Prochloraz, Triflumizol;
- Benzimidazole: Benomyl, Carbendazim, Fuberidazole, Thiabendazol;
- Sonstige: Ethaboxam, Etridiazol, Hymexazol, 2-(4-Chlor-phenyl)-N-[4-(3,4-dimethoxy-phenyl)-isoxazol-5-yl]-2-prop-2-inyloxy-acetamid;

### D) Stickstoffhaltige Heterocyclylverbindungen:

- Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin;
- Pyrimidine: Bupirimat, Cyprodinil, Diflumetorim, Fenarimol, Ferimzone, Mepanipyrim, Nitrapyrin, Nuarimol, Pyrimethanil;
- Piperazine: Triforine;
- Pyrrole: Fludioxonil, Fenpiclonil;
- Morpholine: Aldimorph, Dodemorph, Dodemorphacetat, Fenpropimorph, Tridemorph;
- Piperidine: Fenpropidin;
- Dicarboximide: Fluorimid, Iprodione, Procymidone, Vinclozolin;
- nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäure S-allylester;
- sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, 5-Chlor-7-(4-methylpiperidin-1-yl)-6-(2,4,6-trifluor-phenyl)-[1 ,2,4]triazolo[1,5-a]pyrimidin, 5-Ethyl-6-octyl[1,2,4]triazolo[1,5-a]pyrimidin-7-ylamin;

### E) Carbamate und Dithiocarbamate:

- Thio- und Dithiocarbamate: Ferbam, Mancozeb, Maneb, Metam, Methasulphocarb, Metiram, Propineb, Thiram, Zineb, Ziram;
- Carbamate: Diethofencarb, Benthiavalicarb, Iprovalicarb, Propamocarb, Propamocarbhydrochlorid, Valiphenal, N-(1-(1-(4-Cyanophenyl)ethansulfonyl)-but-2-yl)carbaminsäure-(4-fluorphenyl)ester;

### F) Sonstige Fungizide:

- Guanidine: Dodine, Dodine freie Base, Guazatin, Guazatinacetat, Iminoctadin, Iminoctadin-triacetat, Iminoctadin-tris(albesilat);
- Antibiotika: Kasugamycin, Kasugamycinhydrochlorid-Hydrat, Polyoxine, Streptomycin, Validamycin A;
- Nitrophenylderivate: Binapacryl, Dicloran, Dinobuton, Dinocap, Nitrothal-isopropyl, Tecnazen;
- Organometallverbindungen: Fentin-Salze wie beispielsweise Fentin-acetat, Fentinchlorid, Fentin-hydroxid;
- Schwefelhaltige Heterocyclylverbindungen: Dithianon, Isoprothiolane;
- Organophosphorverbindungen: Edifenphos, Fosetyl, Fosetyl-Aluminium, Iprobenfos, Phosphorige Säure und ihre Salze, Pyrazophos, Tolclofos-methyl;
- Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
- Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
- Biologische Pilzbekämpfungsmittel, Pflanzenstärkungsmittel: Ampelomyces quisqualis (z.B. das Produkt AQ 1 O® der Fa. Intrachem Bio GmbH & Co. KG, Deutschland), Aspergillus flavus (z.B. das Produkt AFLAGUARD® der Fa. Syngenta, Schweiz), Aureobasidium pullulans (z.B. das Produkt BOTECTOR® der Fa. bio-ferm GmbH, Deutschland), Bacillus pumilus (z.B. Stamm NRRL Nr. B-30087 in SONATA® und BALLAD® Plus der Fa. AgraQuest Inc., USA), Bacillus subtilis (z.B. Stamm NRRL-Nr. B-21661 in RHAPSODY®, SERENADE® MAX und SERENADE® ASO der Fa. AgraQuest Inc., USA), Bacillus subtilis var. amyloliquefaciens FZB24 (z.B. das Produkt TAEGRO® der Fa. Novozyme Biologicals, Inc., USA), Candida oleophila I-82 (z.B. das Produkt ASPIRE® der Fa. Ecogen Inc., USA), Candida saitoana (z.B. die Produkte BIOCURE® (in Mischung mit Lysozym) und BIOCOAT® der Firmen MicroFlo Company, USA (BASF SE) und Arysta), Chitosan (z.B. ARMOUR-ZEN der Fa. BotriZen Ud., Neuseeland), Clonostachys rosea f. catenulata, auch genannt Gliocladium catenulatum (z.B. Stamm J1446: PRESTOp® der Fa. Verdera, Finnland), Coniothyrium minitans (z.B. das Produkt CONTANS® der Fa. Prophyta, Deutschland), Cryphonectria parasitica (z.B. das Produkt Endothia parasitica der Firma CNICM, Frankreich), Cryptococcus albidus (z.B. das Produkt YIELD PLUS® der Fa. Anchor Bio-Technologies, South Africa), Fusarium oxysporum (z.B. die Produkte BIOFOX® der Fa. S.I.A.P.A., Italien, und FUSACLEAN® der Fa. Natural Plant Protection, Frankreich), Metschnikowia fructicola (z.B. das Produkt SHEMER® der Fa. Agrogreen, Israel), Microdochium dimerum (z.B. das Produkt ANTI BOT® der Fa. Agrauxine, Frankreich), Phlebiopsis gigantea (z.B. das Produkt ROTSOp® der Fa. Verdera, Finnland), Pseudozyma flocculosa (z.B. das Produkt SPORODEX® der Fa. Plant Products Co. Ud., Kanada), Pythium oligandrum DV74 (z.B. das Produkt POL YVERSUM® der Fa. Remeslo SSRO, Biopreparaty, Tschechische Republik), Reynoutria sachlinensis (z.B. das Produkt REGALIA® der Firma Marrone Bioinnovations, USA), Talaromyces flavus V117b (z.B. das Produkt PROTUS® der Fa. Prophyta, Deutschland), Trichoderma asperellum SKT-1 (z.B. das Produkt ECO-HOPE® der Fa. Kumiai Chemical Industry Co., Ud., Japan), T. atroviride LC52 (z.B. das Produkt SENTINEL® der Fa. Agrimm Technologies Ud, Neuseeland), T. harzianum T-22 (z.B. das Produkt PLANTSHIELD® der Firma BioWorks Inc., USA), T. harzianum TH 35 (z.B. das Produkt ROOT PRO® der Firma Mycontrol Ud., Israel), T. harzianum T-39 (z.B. die Produkte TRICHODEX® und TRICHODERMA 2000® der Fa. Mycontrol Ud., Israel und Makhteshim Ud., Israel), T. harzianum und T. viride (z.B. das Produkt TRICHOPEL der Firma Agrimm Technologies Ud, Neuseeland), T. harzianum ICC012 und T. viride ICC080 (z.B. das Produkt REMEDIER® WP der Fa. Isagro Ricerca, Italien), T. polysporum und T. harzianum (z.B. das Produkt BINAB® der Fa. BINAB Bio-Innovation AB, Schweden), T. stromaticum (z.B. das Produkt TRICOVAB® von C.E.P.L.A.C., Brasilien), T. virens GL-21 (z.B. das Produkt SOILGARD® der Firma Certis LLC, USA), T. viride (z.B. die Produkte TRIECO® von Ecosense Labs. (India) Pvt. Ud., Indien und BIO-CURE® F der Fa. T. Stanes & Co. Ud., Indien), T. viride TV1 (z.B. das Produkt T. viride TV1 der Firma Agribiotec srl, Italien), Ulocladium oudemansii HRU3 (z.B. das Produkt BOTRY-ZEN® der Firmen Botry-Zen Ud, Neuseeland);
- Sonstige: Biphenyl, Bronopol, Cyflufenamid, Cymoxanil, Diphenylamin, Metrafenon, Pyriofenon, Mildiomycin, Oxin-Kupfer, Spiroxamin, Tolylfluanid, N-(Cyclopropylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-Nethyl-N-methylformamidin, N'-(4-(4-Fluor-3-trifluormethyl-phenoxy)-2,5-dimethylphenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin, 2-{1-[2-(5-Methyl-3-trifluormethyl-pyrazol-1-yl)-acetyl]-piperidin-4-yl}-thiazol-4-carboxylsäure-methyl-(1,2,3,4-tetrahydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethylquinolin-4-yl-ester, Methoxy-essigsäure-6-tert.-butyl-8-fluor-2,3-dimethyl-quinolin-4-yl-ester, N-Methyl-2-{1-[2-(5-methyl-3-trifluormethyl-1H-pyrazol-1-yl)-acetyl]-piperidin-4-yl}-N-[(1R)-1,2,3,4-tetrahydronaphthalen-1-yl]-4-thiazolcarboxamid;

### G) Wachstumsregler:

Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol , Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohydrojasmon, Thidiazuron, Triapenthenol, Tributylphosphorotrithioat, 2,3,5-tri-Jodbenzoesäure, Trinexapac-ethyl und Uniconazol;

### H) Herbizide:

- Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
- Aminosäureanaloga: Bilanafos, Glyphosat, Glufosinat, Sulfosat;
- Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
- Bipyridyle: Diquat, Paraquat;
- Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
- Cyclohexandione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamine, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bromoxynil, Dichlobenil, loxynil;
- Imidazolinone: Imazamethabenz, Imazamox, Imazapic, Imazapyr, Imazaquin, Imazethapyr;
- Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
- Pyrazine: Chloridazon, Flufenpyr-ethyl, Fluthiacet, Norflurazon, Pyridat;
- Pyridine: Aminopyralid, Clopyralid, Diflufenican, Dithiopyr, Fluridone, Fluroxypyr, Picloram, Picolinafen, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, Iodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
- Harnstoffe: Chlorotoluron, Daimuron, Diuron, Fluometuron, Isoproturon, Linuron, Methabenzthiazuron, Tebuthiuron;
- andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobacmethyl, Pyrimisulfan, Pyrithiobac, Pyroxasulfon, Pyroxsulam;
- Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorthai, Cinmethylin, Clomazone, Cumyluron, Cyprosulfamid, Dicamba, Difenzoquat, Diflufenzopyr, Drechslera monoceras, Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, 4-Hydroxy-3-[2-(2-methoxy-ethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropylpyrimidin-4-carboxylsäuremethylester, 6-Chlor-3-(2-cyclopropyl-6-methyl-phenoxy)pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethylester und 4-Amino-3-chlor-6-(4-chloro-3-dimethylamino-2-fluor-phenyl)-pyridin-2-carboxylsäuremethylester;

### I) Insektizide:

- Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
- Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
- Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
- Hemmstoffe des Insektenwachstums:
   a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin;
   b) Ecdyson-Antagonisten: Halofenozid, Methoxyfenozid, Tebufenozid, Azadirachtin;
   c) Juvenoide: Pyriproxyfen, Methoprene, Fenoxycarb;
   d) Lipidbiosynthese-Hemmstoffe: Spirodiclofen, Spiromesifen, Spirotetramat;
- Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-ylmethyl)-2-nitrimino-3,5-dimethyl-[1,3,5] triazinan;
- GABA-Antagonisten: Endosulfan, Ethiprol, Fipronil, Vaniliprol, Pyrafluprol, Pyriprol, 5-Amino-1-(2,6-d ichlor-4-methyl-phenyl)-4-sulfinamoyl-1H-pyrazol-3-thiocarbonsäureamid;
- Macrocyclische Lactone: Abamectin, Emamectin, Milbemectin, Lepimectin, Spinosad, Spinetoram;
- Mitochondrialer Elektronentransportketten-Inhibitor (METI) I;
- Akarizide: Fenazaquin, Pyridaben, Tebufenpyrad, Tolfenpyrad, Flufenerim;
- METI II und III Substanzen: Acequinocyl, Fluacyprim, Hydramethylnon;
- Entkoppler: Chlorfenapyr;
- Hemmstoffe der oxidativen Phosphorylierung: Cyhexatin, Diafenthiuron, Fenbutatinoxid, Propargit;
- Hemmstoffe der Häutung der Insekten: Cryomazin;
- Hemmstoffe von "mixed function oxidases": Piperonylbutoxid;
- Natriumkanalblocker: Indoxacarb, Metaflumizon;
- Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron und Pyrifluquinazon.

Bevorzugt enthält die Prohexadion-Calcium Dispersion einen weiteren Wachstumsregulator. Bevorzugte Wachstumsregulatoren sind Abscisinsäure, Ancymidol, Aviglycin, 6-Benzylaminopurin, Brassinolide, Chlormequatchlorid, Cholinchlorid, Cyclanilid, Diflufenzopyr, Dikegulac, Ethephon, Flurprimidol, Forchlorfenuron, Gibberelline A₁, A₃, A₄, A₇, Inabenfide, Indol-3-essigsäure, Maleinsäurehydrazid, Mefluidid, Mepiquatchlorid, Metconazol, 1-Methylcyclopropen, Naphthalenessigsäure, Paclobutrazol, Prohydrojasmon, Tebuconazol, Thidiazuron, Triapenthenol, 2,3,5-Trijodbenzoesäure,Trinexapac-ethyl und Uniconazol. Besonders bevorzugt sind der Wachstumsregulator Mepiquatchlorid, Chlormequatchlorid oder Ethephon. In einer besonders bevorzugten Ausführungsformt enthält die Prohexadion-Calcium Dispersion Mepiquatchlorid.

In einer spezifischen Ausführungsform ist die Prohexadion-Calcium Dispersion frei von Pestiziden, die kein Wachstumsregulator sind. Vorzugsweise enthält die Prohexadion-Calcium Dispersion 1 bis 70 Gew.%, bevorzugt 15 bis 60 Gew.% und insbesondere 25 bis 40 Gew. % eines weiteren Wachstumsregulators. Ein besonders bevorzugtes Beispiel eines weiteren Wachstumsregulators ist Mepiquatchlorid.

Die Prohexadion-Calcium Dispersion kann weitere Formulierungshilfsmittel enthalten, wobei sich die Wahl der Hilfsmittel üblicherweise nach der konkreten Anwendungsform richtet. Beispiele für geeignete Formulierungshilfsmittel sind Lösungsmittel, feste Trägerstoffe, oberflächenaktive Stoffe (wie Tenside, Schutzkolloide, Dispergiermittel, Netzmittel und Haftmittel), organische und anorganische Verdicker, Bakterizide, Frostschutzmittel, Entschäumer, ggf. Farbstoffe und Kleber (z. B. für Saatgutbehandlung).
Als oberflächenaktive Stoffe kommen, beispielsweise als Tensid, Dispergiermittel oder Netzmittel, die Alkali-, Erdalkali-, Ammoniumsalze von aromatischen Sulfonsäuren, z. B. von Lignin-(Borresperse®-Typen, Borregaard, Norwegen), Phenol-, Naphthalin- (Morwet®-Typen, Akzo Nobel, USA) und Dibutylnaphthalinsulfonsäure (Nekal®-Typen, BASF, Deutschland), sowie von Fettsäuren, Alkyl- und Alkylarylsulfonaten, Alkyl-, Laurylether-und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid- Kondensate, ethoxyliertes Rizinusöl, Polyoxyethylen- oder Polyoxypropylenalkylether, Laurylalkoholpolyglykoletheracetat, Sorbitester, Lignin-Sulfitablaugen, Lignin- sulfonate, Proteine, denaturierte Proteine, Polysaccharide (z.B. Methyleellulose), hydrophob modifizierte Stärken, Polyvinylalkohol (Mowiol®-Typen, Clariant, Schweiz), Polycarboxylate (Sokalan®-Typen, BASF, Deutschland), Polyalkoxylate, Polyvinylamin (Lupamin®-Typen, BASF, Deutschland), Polyethylenimin (Lupasol®-Typen, BASF, Deutschland), Polyvinylpyrrolidon und deren Copolymere in Betracht. Bevorzugt werden Ligninsulfonate.

Als Tenside kommen insbesondere anionische, kationische, nicht-ionische und amphotere Tenside, Blockpolymere und Polyelektrolyte in Betracht. Geeignete anionische Tenside sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Sulfonate von Fettsäuren und Ölen, Sulfonate von ethoxylierten Alkylphenolen, Sulfonate von kondensierten Naphthalinen, Sulfonate von decyl und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate. Bevorzugte Tenside sind anionische Tenside, besonders bevorzugt Alkali-, Erdalkali- oder Ammoniumsalze von Sulfonaten, speziell Alkalisalze von Sulfonate von Naphthalinen und Alkylnaphthalinen.

Geeignete nicht-ionische Tenside sind Alkoxylate, N-alkylierte Fettsäureamide, Aminoxide, Ester oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fett säureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside. Geeignete kationische Tenside sind quaternäre Tenside, beispielsweise quartäre Ammonium-Verbindungen mit einer oder zwei hydrophoben Gruppen, oder Salze langkettiger primärer Amine. Geeignete amphothere Tenside sind Alkylbetaine und Imidazoline. Geeignete Blockpolymere sind Blockpolymere vom A-B oder AB-A Typ umfassend Blöcke aus Polyethylenoxid und Polypropylenoxid oder vom AB-C Typ umfassend Alkanol, Polyethylenoxid und Polypropylenoxid. Geeignete Polyelektrolyte sind Polysäuren oder Polybasen. Beispiele für Polysäuren sind Alkalisalze von Polyacrylsäure. Beispiele für Polybasen sind Polyvinylamine oder Polyethylenamine.

Geeignete Dispergiermittel können aus den oben genannten oberflächenaktiven Stoffen ausgewählt werden. Bevorzugte Dispergiermittel sind die Alkali-, Erdalkali-, Ammoniumsalze von aromatischen Sulfonsäuren, z. B. von Lignin-, Phenol-, Naphthalin- und Dibutylnaphthalinsulfonsäure, sowie von Fettsäuren, Alkyl- und Alkylarylsulfonaten, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Lignin-Sulfitablaugen, und Ligninsulfonate.

Die Prohexadion-Calcium Dispersion kann in spezifischen Ausführungsformen hohe Mengen oberflächenaktiver Stoffe und Tensid umfassen. Sie kann 0,1 bis 40 Gew. %, bevorzugt 1 bis 30 Gew. % und insbesondere 2 bis 20 Gew. % Gesamtmenge von oberflächenaktiven Stoffe und Tensiden umfassen bezogen auf die Gesamtmenge der Zusammensetzung.

Beispiele für Adjuvantien sind organisch modifizierte Polysiloxane, wie BreakThru S 10 240®; Alkoholalkoxylate, wie Atplus®245, Atplus®MBA 1303, Plurafac®LF und Lutensol® ON; EO-PO-Blockpolymerisate, z. B. Pluronic® RPE 2035 und Genapol® B; Alkoholethoxylate, z. B. Lutensol® XP 80; und Natriumdioctylsulfosuccinat, z. B. Leophen® RA.

Beispiele für Verdicker (d.h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan®, CP Kelco), Rhodopol® 23 (Rhodia) oder Veegum® (R.T. Vanderbilt) oder Attaclay® (Engelhard Corp.).

### Feste Trägerstoffe können beispielsweise sein:

a) Anorganische Verbindungen: Mineralerden wie Kieselgele, Silikate, Talkum, Kaolin, Attaclay, Kalkstein, Kalk, Kreide, Löß, Ton, Dolomit, Diatomeenerde, Calcium- und Magnesiumsulfat, Magnesiumoxid, Attapulgite, Montmorillonite, Glimmer, Vermiculite, synthetische Kieselsäuren, amorphe Kieselsäuren und synthetische Calciumsilicate oder deren Mischungen;
b) Organische Verbindungen: gemahlene Kunststoffe, Düngemittel wie Ammoniumphosphat, Ammoniumnitrat, Thioharnstoff und Harnstoff, pflanzliche Produkte wie Getreidemehle, Baumrinden-, Holz- und Nußschalenmehl, Cellulosepulver.

Die festen Trägerstoffe können auch als Klumpungsmittel eingesetzt werden, wie Kieselsäuren. Daher sind Klumpungsmittel im Sinne der vorliegenden Erfindung feste Trägerstoffe.

Bevorzugter fester Trägerstoff ist eine anorganische Verbindung, besonders bevorzugt ist Kieselsäure, insbesondere gefällte Kieselsäure.

Die mittlere Teilchengröße der Kieselsäure d50 (bestimmt über Laserbeugung, z.B. mit Malvern Mastersizer) kann im Bereich von 0,1 bis 100 µm, bevorzugt von 0,5 bis 20 µm und insbesondere bei 1 bis 10 µm liegen. Die spezifische Oberfläche kann im Bereich von 1 bis 500 m²/g, bevorzugt bei 10 bis 100 m²/g liegen (bestimmt mittels Areameter analog zu ISO 5794-1, Annex D).

Die wässrige Lösung umfassend mindestens ein anorganisches Sulfat enthält ein anorganisches Sulfat in einer Konzentration knapp unterhalb des Sättigungspunktes des Sulfats. Das anorganische Sulfat ist bevorzugt in Wasser zu mindestens 1 g/l, bevorzugt zu mindestens 100 g/l, weiter bevorzugt zu mindestens 400 g/l bei 20°C löslich.

Geeignete anorganische Sulfate sind Sulfate von Metallionen oder von quarternären Stickstoffverbindungen (wie Ammonium). Bevorzugte anorganische Sulfate sind das Ammoniumsulfat, sowie Hydrogensulfate. Als Hydrogensulfate sind Salze enthaltend das Anion HSO₄⁻ geeignet, beispielsweise Alkalisalze oder Ammoniumsalze. Bevorzugte Hydrogensulfate sind das Natriumhydrogensulfat, das Ammoniumhydrogensulfat, und das Kaliumhydrogensulfat.

Der Sättigungspunkt der anorganischen Sulfate unterscheidet sich von Molekül zu Molekül und die Konzentration des Sulfats kann bzw. muss entsprechend angepasst werden. Beispiele für Sättigungspunkte bevorzugter anorganischer Sulfate in Wasser bei 20°C sind 754 g/l für Ammoniumsulfat, 490 g/l für Kaliumhydrogensulfat und 1080 g/l bei Natriumhydrogensulfat.

Die in der wässrigen Lösung für Ammoniumsulfat zu wählende Konzentration bei einer Temperatur von 20°C beträgt 150 g/l bis 750 g/l, vorzugsweise 400 g/l bis 750 g/l, weiter bevorzugt 600 g/l bis 750 g/l. Am meisten bevorzugt ist ein kleiner Bereich kurz vor der Löslichkeitsgrenze von etwa 680 g/l bis 750 g/l oder 680 g/l bis 740 g/l, oder 680 g/l bis 730 g/l, oder 680 g/l bis 720 g/l, oder 680 g/l bis 710 g/l, oder 680 g/l bis 700 g/l.

Die in der wässrigen Lösung für Kaliumhydrogensulfat zu wählende Konzentration bei einer Temperatur von 20°C beträgt 50 g/l bis 485 g/l, vorzugsweise 100 g/l bis 485 g/l, weiter bevorzugt 300 g/l bis 485 g/l. Am meisten bevorzugt ist ein kleiner Bereich kurz vor der Löslichkeitsgrenze von etwa 400 g/l bis 485 g/l oder 400 g/l bis 475 g/l, oder 400 g/l bis 465 g/l, oder 400 g/l bis 455 g/l, oder 400 g/l bis 445 g/l, oder 400 g/l bis 435 g/l.

Die in der wässrigen Lösung für Natriumhydrogensulfat zu wählende Konzentration bei einer Temperatur von 20°C beträgt 450 g/l bis 1075 g/l, vorzugsweise 650 g/l bis 1075 g/l, weiter bevorzugt 850 g/l bis 1075 g/l. Am meisten bevorzugt ist ein kleiner Bereich kurz vor der Löslichkeitsgrenze von etwa 1000 g/l bis 1075 g/l oder 1000 g/l bis 1065 g/l, oder 1000 g/l bis 1055 g/l, oder 1000 g/l bis 1045 g/l, oder 1000 g/l bis 1035 g/l, oder 1000 g/l bis 1025 g/l.

Für andere anorganische Sulfate, welche ebenfalls verwendet werden können, lässt sich der Sättigungspunkt in Wasser bei 20°C leicht bestimmen bzw. aus der Literatur ableiten. Auch für diese gelten die oben genannten Bereiche von 5 bis zu 600 g/l unter dem Sättigungspunkt, sowie bevorzugt von etwa 5 bis 75 g/l unterhalb des Sättigungspunktes.

In weiteren Ausführungsformen der Erfindung kann die wässrige Lösung umfassend mindestens ein anorganisches Sulfat zusätzliche Bestandteile oder Hilfsstoffe umfassen.

Beispielsweise kann ein Pestizid, wie oben definiert, in der Sulfatlösung enthalten sein. Vorzugsweise können wasserlösliche Pestizide in der Sulfatlösung enthalten sein. Solche wasserlöslichen Pestizide können beispielsweise salzartig sein. Durch die Beimischung von salzartigen Pestiziden oder anderen Zusatzstoffen zu wässrigen Lösungen umfassend ein anorganisches Sulfat kann das erfindungsgemäße Wirbelschicht-Granulierungsverfahren vorteilhafterweise Probleme verhindern, welche in den herkömmlichen Verfahren aus dem Stand der Technik durch einen zu hohen Salzgehalt in den Prohexadion-Calcium Dispersionen entstehen können (bspw. eine Störung der Dispersion durch eine zu hohe Salzfracht), bzw. welche den Einsatz oder die Kombination bestimmter Beimengungen von Pestiziden oder anderen Stoffen in den herkömmlichen Verfahren aus dem Stand der Technik unmöglich machen. Die erfindungsgemäße Beimischung von salzartigen Pestiziden oder anderen Zusatzstoffen zu wässrigen Lösungen umfassend ein anorganisches Sulfat ermöglicht es somit, bisher inkompatible Kombinationen von Stoffen, insbesondere inkompatible Kombinationen von Pestiziden gem. dem hierin beschriebenen Wirbelschicht-Granulierungsverfahren zu einem homogenen Granulat zu verarbeiten. Beispiele für solche inkompatiblen Stoffe sind chemisch inkompatible Stoffe und/oder physikalisch inkompatible Stoffe, welche typischerweise in einer gemeinsamen, z.B. flüssigen, oder dynamischen Umgebung, unbeabsichtigt miteinander reagieren. Dies kann etwa zur ungewollten Bildung von Co-Kristallen oder zum Verkleben der Stoffe führen oder andere negative Effekte auslösen. Durch das erfindungsgemäße Verfahren wie oben beschrieben lassen sich derartige Effekte vermeiden.

Die vorliegende Erfindung betrifft in einem weiteren Aspekt ein homogenes Granulat, das ein anorganisches Sulfat und Prohexadion-Calcium umfasst. Das anorganische Sulfat und das Prohexadion-Calcium sind dabei gleichmäßig im Granulat verteilt. Das anorganische Sulfat kann ein Sulfat von Metallionen oder von quarternären Stickstoffverbindungen (wie Ammonium) sein. Bevorzugte anorganische Sulfate im Granulat sind das Ammoniumsulfat, sowie Hydrogensulfate, insbesondere die bevorzugten Natriumhydrogensulfat, Ammoniumhydrogensulfat, und Kaliumhydrogensulfat.

Das homogene Granulat kann einen oder mehrere Partikel umfassen. Die Partikel umfassen anorganisches Sulfat und das Prohexadion-Calcium welche gleichmäßig in den Partikeln verteilt sind. Typischerweise bezieht sich der Begriff Granulat auf einen Einzelpartikel, welcher anorganisches Sulfat und das Prohexadion-Calcium in gleichmäßiger oder homogener Verteilung enthält.

Der Begriff der "Homogenität", wie im Zusammenhang mit dem Granulat bzw. Partikel verwendet, bezeichnet eine gleichmäßige, nicht-Schwerpunkt-mäßige Verteilung der Komponenten anorganisches Sulfat und Prohexadion-Calcium im Granulat bzw. Partikel. Das heißt, in jedem Raumsektor des Granulates/Partikels kann dasselbe oder annähernd dasselbe Verhältnis von anorganischem Sulfat und Prohexadion-Calcium aufgefunden werden. Unter einem "annähernd gleichen Verhältnis" ist ein Verhältnis in einem beliebigen Raumsektor 1 zu verstehen, das maximal 15%, 12%, 10%, bevorzugt maximal 8%, 6%, 5%, 4%, 3%, 2% oder besonders bevorzugt maximal 1% oder weniger als 1% Mischungsverhältnis der Komponenten des Granulates an einem anderen beliebig gewählten Raumsektor 2 abweicht.

Dieses Verhältnis entspricht im Prinzip dem für die Herstellung des Granulates eingesetzten Mischungsverhältnis. In speziellen Ausführungsformen kann das Verhältnis in beliebigen Raumsektoren des Granulates maximal 15%, 12%, 10%, bevorzugt maximal 8%, 6%, 5%, 4%, 3%, 2% oder besonders bevorzugt maximal 1 % oder weniger als 1 % von dem für die Herstellung des Granulates eingesetzten Mischungsverhältnis abweichen.

Damit unterscheidet sich das erfindungsgemäße Granulat vom Granulat wie in WO 2011/012495 beschrieben, da dort eine Kern-Schale Struktur gegeben ist, d.h. es findet sich nicht in allen Raumsektoren dasselbe oder annähernd dasselbe Verhältnis von anorganischem Sulfat und Prohexadion-Calcium. Stattdessen ist im Kern ausschließlich Sulfat vorhanden, während in der Schale ausschließlich Prohexadion-Calcium vorhanden ist.

Die Homogenität im Granulat/Partikel wie oben beschrieben ist in spezifischen Ausführungsformen ebenfalls im Falle von komplexeren Mischungen bzw. der Anwesenheit zusätzlicher Komponenten gegeben. Diese zusätzlichen Komponenten liegen somit ebenfalls in gleichmäßiger oder annähernd gleichmäßiger Verteilung zusammen mit anorganischem Sulfat und Prohexadion-Calcium im gesamten Granulat/Partikel vor.

Die Partikel können eine kugelige, rundliche oder knollenförmige Form besitzen. Meistens weisen die Partikel Ausbuchtungen, abgerundete Elemente und große Hohlräume oder Vertiefungen auf. Auf der Oberfläche sind typischerweise Strukturreliefs in Plättchenform in unregelmäßiger Anordnung gegeben. Abbildung 2 zeigt diese Formen in verschiedenen Vergrößerungen. Die Partikel können im Einzelfall jedoch in ihrer Form von den gezeigten und beschriebenen Formen abweichen, z.B. durch die Anwesenheit weiterer oder unterschiedlicher Komponenten, die Verwendung unterschiedlicher anorganischer Sulfate, Unterschiede im Herstellungsverfahren etc.

Die Partikelgröße bzw. die Korngröße des Granulates kann von 10 bis 10.000 µm, bevorzugt von 50 bis 5000 µm, und besonders bevorzugt von 200 bis 2500 µm betragen.

Die Korngröße kann durch Siebung (z.B. nach DIN 66165) bestimmt werden. Üblicherweise weisen mindestens 70 Gew. %, bevorzugt mindestens 90 Gew. %, der Granulatpartikel diese Korngröße auf. Die Korngröße des Granulats kann durch moderne Laserbeugungsverfahren (wie Malvern) bestimmt werden, oder bevorzugt mit Hilfe klassischer Fraktioniermethoden, wie Siebturm.

Das erfindungsmäßige Granulat weist vorzugsweise eine poröse Matrixstruktur auf. Typischerweise besitzen alle Partikel des Granulates eine poröse Matrixstruktur. Der Begriff "poröse Matrix" bezieht sich auf eine dreidimensionale Struktur welche Poren oder Öffnungen aufweist. Die Poren oder Öffnungen können dabei in Form eines Maschengeflechtes oder Netzwerkes im gesamten Partikel oder in Teilen des Partikels vorhanden sein. Die Poren können unterschiedliche Größe aufweisen. So können Poren einen Durchmesser haben, der 2%, 3%, 5%, 10%, 15%, 20%, 30%, 40%, oder 50%, 100%, 200%, 400%, oder mehr als 1000% des Durchmessers anderer Poren beträgt. Der Porendurchmesser kann beispielsweise 0,5 µm bis 100 µm betragen, etwa 1 µm, 2µm, 5 µm, 8 µm, 10 µm, 12 µm, 15 µm, 18 µm, 20 µm, 22 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, oder 100 µm betragen. Der Porendurchmesser beträgt vorzugweise zwischen 10 und 30 µm.

Der poröse Charakter des Granulates bzw. der Partikel kann sich an der Oberfläche zeigen bzw. im gesamten oder im Wesentlichen im gesamten Partikel. In speziellen Ausführungsformen weist das Granulat eine poröse Matrix in einem, mehreren oder allen Oberflächenbereichen auf, ist aber im Kernbereich nicht porös oder nur teilweise porös. Die teilweise Porosität kann auch in anderen Bereichen des Partikels auftreten. In anderen Ausführungsformen ist die poröse Matrixstruktur im gesamten oder im Wesentlichen im gesamten Partikel gegeben.

Die Poren können unterschiedliche Formen haben. Sie können irregulär, rund, kurvig, alveolär, flach, annähernd trigonal, annähernd tetragonal, annähernd hexagonal etc. sein. Typischerweise weisen die Poren keine einheitliche Form auf, sondern zeigen eine Mischung aus verschiedenen Formtypen. Rein geometrische Formen sind nicht bzw. kaum vorhanden. Die Poren können Öffnungen in eine Richtung, beispielsweise in Richtung einer x-, y- oder z-Achse oder in mehrere Richtungen aufweisen.

Die Poren sind typischerweise unregelmäßig auf dem Granulat bzw. Partikel verteilt, d.h. Bereiche mit vielen Poren können sich mit Bereichen mit wenigen oder gar keinen Poren abwechseln.

Das homogene Granulat kann in bestimmten Ausführungsformen ein weiteres Pestizid umfassen. Ebenfalls vorgesehen ist die Anwesenheit von mehr als einem weiteren Pestizid, beispielsweise zwei, drei oder mehr Pestiziden. Die Pestizide können aus der oben gegebenen Liste von Pestiziden ausgewählt werden. Es ist bevorzugt, dass das Pestizid ein weiterer Wachstumsregulator ist. Bevorzugte Wachstumsregulatoren sind Abscisinsäure, Ancymidol, Aviglycin, 6-Benzylaminopurin, Brassinolide, Chlormequatchlorid, Cholinchlorid, Cyclanilid, Diflufenzopyr, Dikegulac, Ethephon, Flurprimidol, Forchlorfenuron, Gibberelline A₁, A₃, A₄, A₇, Inabenfide, Indol-3-essigsäure, Maleinsäurehydrazid, Mefluidid, Mepiquatchlorid, Metconazol, 1-Methylcyclopropen, Naphthalenessigsäure, Paclobutrazol, Prohydrojasmon, Tebuconazol, Thidiazuron, Triapenthenol, 2,3,5-Trijodbenzoesäure,Trinexapac-ethyl und Uniconazol. Besonders bevorzugt sind der Wachstumsregulator Mepiquatchlorid, Chlormequatchlorid oder Ethephon. In einer besonders bevorzugten Ausführungsform enthält das Granulat Mepiquatchlorid.

Vorzugsweise enthält das Granulat 1 bis 70 Gew. %, bevorzugt 15 bis 60 Gew. % und insbesondere 25 bis 40 Gew. % eines weiteren Wachstumsregulator, wie Mepiquatchlorid.

Das Granulat kann weiterhin eines oder mehrere der oben genannten Formulierungshilfsmittel enthalten:
Bevorzugter fester Trägerstoff ist eine anorganische Verbindung, besonders bevorzugt Kieselsäure, insbesondere gefällte Kieselsäure. Das Granulat kann 0,5 bis 50 Gew.%, bevorzugt 1 bis 30 und insbesondere 5 bis 15 Gew. % festen Trägerstoff enthalten.

Bevorzugte oberflächenaktive Stoffe sind Alkali-, Erdalkali- oder Ammoniumsalze von Sulfonaten, wie Ligninsulfonate und Sulfonate von Naphthalinen und Alkylnaphthalinen.

Das Granulat enthält bevorzugt eine Mischung von mindestens zwei verschiedenen oberflächenaktiven Stoffen. Bevorzugt enthält das Granulat mindestens zwei verschiedene Sulfonate. Das Granulat kann 0,5 bis 40 Gew.%, bevorzugt 2 bis 25 und insbesondere 5 bis 20 Gew. % oberflächenaktive Stoffe enthalten. Bevorzugt enthältdas Granulat 0,5 bis 40 Gew. %, bevorzugt 2 bis 25 und insbesondere 5 bis 20 Gew. % Lignosulfonat.

Bevorzugter Entschäumer sind Entschäumer auf Siliconbasis. Das Granulat kann 0,1 bis 5 Gew. % Entschäumer enthalten.

Das Granulat kann optional weiterhin ein Säuerungsmittel enthalten. Das Säuerungsmittel ist eine meist feste Chemikalie. Der Schmelzpunkt liegt meist bei mindestens 50°C, bevorzugt bei mindestens 100°C und insbesondere bei mindestens 150 °C.

In einer weiteren bevorzugten Ausführungsform ist das Säuerungsmittel bei 20°C in Wasser zu mindestens 50 g/l, besonders bevorzugt zu mindestens 150 g/l und insbesondere zu mindestens 300 g/l löslich. Das Granulat kann bis zu 35 Gew. %, bevorzugt bis zu 25 Gew. %und insbesondere bis zu 15 Gew. % Säuerungsmittel enthalten.

Bevorzugtes festes Säuerungsmittel ist eine Carbonsäure mit zwei bis 20 Kohlenstoffatomen, ein Hydrogensulfat oder ein Hydrogenphosphat. Mischungen der vorstehend genannten Säuerungsmittel sind ebenfalls möglich. In einer weiteren bevorzugten Ausführungsform ist das Säuerungsmittel eine Carbonsäure mit zwei bis sechs Kohlenstoffatomen (speziell Oxalsäure), ein Hydrogensulfat oder ein Hydrogenphosphat. In einer weiteren bevorzugten Ausführungsform ist das Säuerungsmittel ein Hydrogensulfat oder ein Hydrogenphosphat.

Die Carbonsäure kann eine lineare, verzweigte oder cyclische Carbonsäure mit zwei bis 20 Kohlenstoffatomen sein. Die Carbonsäure enthält meist mindestens eine Carbonsäuregruppe (-COOH), beispielsweise eine, zwei oder drei. Die Carbonsäure enthält zwei bis 20 Kohlenstoffatome, bevorzugt zwei bis 12, insbesondere zwei bis 8 Kohlenstoffatome. Sie kann neben Carbonsäuregruppen weitere funktionelle Gruppen, wie Alkoholgruppen, aufweisen. Meist hat die Carbonsäure mindestens eine Carbonsäuregruppe mit einem pKs-Wert bei 20°C im Bereich von 0,5 bis 6,0, bevorzugt von 1,0 bis 3,5. Beispiele für Carbonsäuren mit zwei bis 20 Kohlenstoffatomen sind gesättigte und ungesättigte C8-20-Fettsäuren, Alkandicarbonsäuren (wie Oxalsäure, Malonsäure, Bernsteinsäure, Glutarsäure, Adipinsäure, Sebacinsäure), hydroxyfunktionalisierte Carbonsäure (wie Zitronensäure, Weinsäure, Äpfelsäure), Aminofunktionalisierte Carbonsäure (wie Glutaminsäure, Asparaginsäure), Ketofunktionalisierte Carbonsäure (wie Ketoglutarsäure, Oxalessigsäure), aromatische Carbonsäuren (wie Pthalsäure, Isophthalsäure, Terephthalsäure, Benzoesäure, Salicylsäure), ungesättigte Dicarbonsäuren (wie Fumarsäure, Maleinsäure).

Bevorzugte Carbonsäuren mit zwei bis 20 Kohlenstoffatomen sind C8-20-Fettsäuren, Alkandicarbonsäuren und hydroxyfunktionalisierte Carbonsäuren, insbesondere Alkandicarbonsäuren und hydroxyfunktionalisierte Carbonsäuren. Speziell bevorzugte Carbonsäuren sind Zitronensäure und Oxalsäure.
Insbesondere ist die Carbonsäure Oxalsäure (Schmelzpunkt >157°C, Wasserlöslichkeit 1000 g/I). In einer weiteren Ausführungsform ist die Carbonsäure insbesondere Zitronensäure (Schmelzpunkt 153°C). Von Zitronensäure sind auch Hydrate, wie das Monohydrat bekannt, die hier ebenfalls unter dem Begriff Zitronensäure verstanden werden.

In einer bevorzugten Ausführungsform enthält das homogene Granulat
1 bis 30 Gew. % Prohexadion-Calcium,
10 bis 60 Gew. % anorganisches Sulfat,
optional 1 bis 50 Gew. % weiteres Pestizid,
und ad 100 Gew. % Formulierungshilfsmittel, und optional ein Säuerungsmittel.

In einer besonders bevorzugten Ausführungsform enthält das Granulat
1 bis 30 Gew. % Prohexadion-Calcium,
10 bis 60 Gew. % Ammoniumsulfat,
1 bis 50 Gew. % weiteren Wachstumsregulator, und
ad 100 Gew. % Formulierungshilfsmittel und optional ein Säuerungsmittel.

In einer zusätzlichen Ausführungsform bezieht sich die Erfindung auf ein Granulat, das durch ein Verfahren zur Herstellung eines Granulats enthaltend Prohexadion-Calcium und ein anorganisches Sulfat erhältlich ist, wobei das Verfahren die Wirbelschichtgranulierung einer wässrigen Dispersion umfassend Prohexadion-Calcium und einer wässrigen Lösung umfassend mindestens ein anorganisches Sulfat umfasst.

In einer weiteren Ausführungsform bezieht sich die Erfindung auf ein Granulat, das durch ein Verfahren zur Herstellung eines Granulats enthaltend Prohexadion-Calcium und ein anorganisches Sulfat erhältlich ist, wobei das Verfahren die Wirbelschichtgranulierung einer wässrigen Dispersion umfassend Prohexadion-Calcium und einer wässrigen Lösung umfassend mindestens ein anorganisches Sulfat umfasst und wobei die Lösung des anorganischen Sulfats getrennt in die Wirbelschichtkammer eingebracht werden.

In einer weiteren Ausführungsform bezieht sich die Erfindung auf ein Granulat, das durch ein Verfahren zur Herstellung eines Granulats enthaltend Prohexadion-Calcium und ein anorganisches Sulfat erhältlich ist, wobei das Verfahren die Wirbelschichtgranulierung einer wässrigen Dispersion umfassend Prohexadion-Calcium und einer wässrigen Lösung umfassend mindestens ein anorganisches Sulfat umfasst, wobei die Lösung des anorganischen Sulfats getrennt in die Wirbelschichtkammer eingebracht werden und wobei die Prohexadion-Calcium Dispersion und die Lösung des anorganischen Sulfats gleichzeitig in die Wirbelschichtkammer eingebracht werden. In einer weiteren Ausführungsform darf die Prohexadion-Calcium Dispersion höchstens 5 Gew. % anorganisches Sulfat enthalten.

In einer bevorzugten Ausführungsform ist das in den oben genannten Verfahren genannte anorganische Sulfat Ammoniumsulfat oder ein Hydrogensulfat ist, vorzugsweise Natriumhydrogensulfat oder Kaliumhydrogensulfat.

In weiteren, spezifischen Ausführungsformen bezieht sich die Erfindung auf ein Granulat, das durch jedes andere, oben beschriebene Verfahren zur Herstellung eines Granulats enthaltend Prohexadion-Calcium und ein anorganisches Sulfat erhältlich ist.

Die vorliegende Erfindung betrifft ferner die Verwendung des erfindungsgemäßen Granulats zur Herstellung einer Spritzbrühe. Die Spritzbrühe kann eine wässrige Lösung oder eine wässrige Suspension sein, je nach Löslichkeit und Konzentration der einzelnen Bestandteile des Granulats. Die Spritzbrühe ist üblicherweise die anwendungsfertige Zusammensetzung, die mit Applikationsgeräten nach dem Stand der Technik ausgebracht werden kann. Zur Herstellung der Spritzbrühe wird das Granulat üblicherweise mit einem Überschuss an Wasser vermischt. Dabei dispergiert oder löst sich das Granulat vorteilhafterweise schnell und vollständig in Wasser. In einer besonderen Ausführungsform betrifft die vorliegende Erfindung ebenfalls die Verwendung des erfindungsgemäßen Granulats zur beschleunigten Herstellung einer Spritzbrühe bei niedrigen Temperaturen, bspw. im Bereich von unter 10°C, vorzugsweise bei ca. 5°C. Der Begriff "beschleunigt", wie oben verwendet, impliziert, dass die Herstellung der Spritzbrühe über die Auflösung des Granulats in Wasser bei niedrigen Temperaturen unter 10°C, insbesondere 5°C, aufgrund einer bis zu 15% gesteigerten Löslichkeit des Granulats innerhalb einer Zeitspanne von 1 Minute bis 5 Minuten, vorzugsweise unter 5 Minuten, weiter bevorzugt unter 3 Minuten, am bevorzugtesten unter 2 Minuten, beispielsweise unter 1.5 Minuten. durchgeführt werden kann. Die wässrige Sprühsuspension kann bis zu 5,0 kg, bevorzugt 0,25 bis 2,5 kg Granulat in 100 bis 4000 I Wasser enthalten.

Das Granulat wird meist vor der Anwendung verdünnt, um eine durch Versprühen applizierbare Lösung oder Suspension herzustellen (sog. Spritzbrühe). Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Bevorzugt wird Wasser verwendet, so dass eine wässrige Lösung oder Suspension entsteht. Insbesondere bei der Verwendung von sehr hartem und/oder alkalischem Wasser kann es vorteilhaft sein, der zum Versprühen angesetzten Lösung oder Suspension weitere Mengen an anorganischen Sulfaten (z.B. Ammoniumsulfat) und/oder Säuerungsmittel zur Erzielung eines pH-Wertes von 3,5 bis 6,5, bevorzugt von 4,0 bis 5,5, zuzusetzen.

So kann in spezifischen Ausführungsformen der Erfindung der Zusatz von 0,01 bis 2 Gew. %, bevorzugt 0,1 bis 0,5 Gew. % anorganisches Sulfat hilfreich sein.

Die Spritzbrühe wird üblicherweise durch Versprühen oder Vernebeln angewendet. Als Tankmix können Öle verschiedenen Typs, Netzmittel, Adjuvants, Herbizide, Bakterizide, Fungizide oder Insektizide unmittelbar vor der Anwendung zugesetzt werden. Diese Mittel können zu den erfindungsgemäßen Granulaten im Gewichtsverhältnis Granulat: Tankmix von 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %.

Die Aufwandmengen liegen bei der Anwendung im Pflanzenschutz je nach Art des gewünschten Effektes zwischen 0,001 und 2,0 kg Wirkstoff pro ha.

Die vorliegende Erfindung betrifft in einem weiteren Aspekt die Verwendung des erfindungsgemäßen Granulats zur Regulierung des Wachstums von Pflanzen. Es können praktisch alle Entwicklungsstadien einer Pflanze erfasst werden.

Bevorzugte Pflanzen sind Obstbäume (insbesondere Apfel, Birne und Süßkirsche), Gramineen (insbesondere Weizen, Triticale, Gerste, Hafer und Roggen, aber auch Mais, Reis, Zuckerrohr und Rasengräser).

Weitere geeignete Pflanzen sind Baumwolle, Sojabohnen, Hirse, Sonnenblumen, Raps, Erdnüsse, Kaffee, Reis, Zierplanzen, Rasengräser (wie Kentucky Bluegrass, einjähriges und mehrjähriges Ryegras, Tall Fescue, Rotschwingel, weißes Straußgras, einjähriges Bluegrass, Zoysia, Bermude, Centopide, St. Augustine). Als Pflanzen können auch solche verwendet werden, die durch Züchtung, einschließlich gentechnischer Methoden, gegen Insekten-, Viren-, Bakterien- oder Pilzbefall oder Herbizidapplikationen tolerant sind.

Die folgenden Beispiele a) bis g) erläutern verschiedene erfindungsgemäße Verwendungen:
a) So lässt sich beispielsweise das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so dass der arbeits- und kostenaufwendige Rasenschnitt reduziert werden kann.
b) Von wirtschaftlichem Interesse ist auch die Erhöhung der Standfestigkeit von lageranfälligen Kulturen wie Getreide, Mais und Sonnenblumen. Die dabei verursachte Halmverkürzung und Halmverstärkung verringern oder beseitigen die Gefahr des "Lagerns" (des Umfallens) von Pflanzen unter ungünstigen Witterungsbedingungen vor der Ernte. Wichtig ist auch die Anwendung von Wachstumsregulatoren zur Hemmung des Längenwachstums und zur zeitlichen Veränderung des Reifeverlaufs bei Baumwolle. Damit wird ein effizienteres mechanisches Beernten dieser Kulturpflanze ermöglicht. Bei Obst- und anderen Bäumen lassen sich mit den Wachstumsregulatoren Schnittkosten einsparen. Außerdem kann die Alternanz von Obstbäumen durch Wachstumsregulatoren gebrochen werden. Durch Anwendung von Wachstumsregulatoren kann auch die seitliche Verzweigung der Pflanzen vermehrt werden. Daran besteht Interesse, wenn z. B. bei Getreidepflanzen eine intensivierte Bestockung erwünscht ist.
c) Mit Wachstumsregulatoren lässt sich beispielsweise bei Wintergetreide und Winterraps auch die Winterfestigkeit erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Pflanzen nach der Aussaat und vor dem Einsetzen der Winterfröste trotz günstiger Wachstumsbedingungen in der vegetativen Entwicklung zurückgehalten. Dadurch wird auch die Frostgefährdung solcher Pflanzen beseitigt, die zum vorzeitigen Abbau der Blühhemmung und zum Übergang in die generative Phase neigen. Bei Wintergetreide ist es vorteilhaft, wenn die Bestände durch Behandlung mit Wachstumsregulatoren im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - dem Befall mit verschiedenen Krankheiten (z. B. Pilzkrankheit) vorgebeugt werden. Die Hemmung des vegetativen Wachstums ermöglicht außerdem bei vielen Kulturpflanzen eine dichtere Bepflanzung des Bodens, so dass ein Mehrertrag bezogen auf die Bodenfläche erzielt werden kann.
d) Mit Hilfe von Wachstumsregulatoren lassen sich die Mehrerträge sowohl an Pflanzenteilen als auch an Pflanzeninhaltsstoffen erzielen. So ist es beispielsweise auch möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluss zu stimulieren. Dabei können die Wirkstoffe Ertragssteigerungen durch Eingriffe in den pflanzlichen Stoffwechsel bzw. durch Förderung oder Hemmung des vegetativen und/ oder des generativen Wachstums verursachen. Mit Pflanzenwachstums-regulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.
e) Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sprossteil der Pflanze ist auch für ein gut kontrolliertes Entblättern von Nutzpflanzen wie beispielsweise Baumwolle wesentlich.
f) Mit Wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z. B. in ariden oder semiariden Gebieten. Durch den Einsatz von Wachstumsregulatoren lässt sich die Intensität der Bewässerung reduzieren und damit eine kostengünstigere Bewirtschaftung durchführen. Unter dem Einfluss von Wachstumsregulatoren kommt es zu einer besseren Ausnutzung des vorhandenen Wassers, weil u. a. die öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflusst wird.
g) Mit Wachstumsregulatoren kann auch durch Veränderungen an Stoffwechselvorgängen und/oder durch Veränderungen der cytologischen Struktur eine physiologische Resistenz gegen Pathogene und Schadinsekten erzielt werden.

Vorteile der vorliegenden Erfindung ist, dass das Verfahren mit Standardapparaturen großtechnisch durchgeführt werden kann. Es erlaubt die Kombination von Prohexadion-Calcium mit Sulfaten in einer einzigen Formulierung. Durch die Eindüsung sowohl der Prohexadion-Calcium enthaltenden Komponente, als auch der anorganischen Sulfat-Komponente kann die Wirbelschichtgranulierung kontinuierlich durchgeführt werden und muss nicht, wie im herkömmlichen Ansatz, im Batch-Verfahren betrieben werden.

Weiterhin kommen nichttoxische Einsatzmaterialien zur Verwendung. Die nach dem erfindungsgemäßen Verfahren hergestellten Granulate sind sehr lagerstabil und können hohe Mengen an Sulfate enthalten. Beim Verdünnen mit Wasser bilden sich schnell SprühSuspensionen, selbst bei Verdünnen mit hartem Wasser und insbesondere bei Verdünnungsvorgängen bei niedrigen Temperaturen, etwa im Bereich unter 10°C, bspw. bei 5°C. Ein vorhergehendes Homogenisieren des Granulates ist vor dem Verdünnungsschritt nicht notwendig. Auch der Einsatz von modernen Einspülschleusen ist ohne ein vorhergehendes "Anmaischen" des Granulats möglich.

Das Granulat ist bei Teilentnahmen aus dem Handelsgebinde einfach dosierbar, da frei fließfähig (Dry Flowable). Die Granulate haben eine hohe bioregulatorische Wirksamkeit.

Die vorliegenden Formulierungen bieten darüber hinaus folgende Vorteile:
- In der Regel ist kein Zumischen von Adjuvants (z.B. Ammoniumsulfat oder Säuerungsmittel) erforderlich, was eine Arbeitserleichterung, Verbesserung der Sicherheit für den Anwender, und weniger potentielle Fehlerquellen beim Herstellen der Spritzbrühe bedeutet.
- In Anwesenheit eines Säuerungsmittels (leicht saurer pH der Suspension) liegt Prohexadion undissoziiert (apolar) vor und kann so beschleunigt von pflanzlichen Zellen aufgenommen werden. Dadurch ergibt sich, insbesondere bei ungünstigen Applikationsbedingungen (z.B. schnelles Antrocknen des Spritzbelags bei warm-trockener Witterung), eine erhöhte Wirkstoffeffizienz. Weiterhin wird die Regenfestigkeit erheblich schneller erreicht.
- Durch die poröse Matrixstruktur des Granulats ist eine signifikante Steigerung der Dispergierfähigkeit des Granulats nach 1 bis 5 minütigem Rühren in kaltem Wasser möglich (siehe auch Beispiel 3, unten). D.h. die Löslichkeit von Prohexadion-Calcium ist verbessert, insbesondere bei niedrigen (Wasser-)Temperaturen von unter 10°C, insbesondere bei Temperaturen von 5°C. Durch die gesteigerte Löslichkeit in kaltem Wasser ist eine deutlich verbesserte bzw. vereinfachte Praxisanwendung im Frühjahr (bei niedrigen Temperaturen im Bereich unter 10°C, bspw. 5°C) möglich.

Die folgenden Beispiele und Abbildungen sollen die Erfindung erläutern. Sie dienen nicht dazu, die Erfindung einzuschränken. Der Fachmann ist in der Lage, weitere Modifikationen des hierin beschriebenen erfinderischen Prinzips auszugestalten und umzusetzen.

### BEISPIELE

### Beispiel 1

### Verfahren zur Wirbelschichtgranulierung gem. dem Stand der Technik (Batch 400126)

### A) Herstellung einer Prohexadion-Ca Sprühsuspension:

Jeder Verfahrensschritt wurde unter geeigneter Kühlung durchgeführt, um sicherzustellen, dass die Temperatur der Sprühsuspension 30°C nicht übersteigt.

Zur Herstellung der Sprühsuspension (35% Feststoffgehalt) wurden die folgenden Komponenten in einen Rührkessel eingebracht:
- Wasser
- Dispersionsagenzien, Benetzungsmittel, Trägerstoffe, Entschäumer
- Prohexadion-Ca techn. (ca. 94.5%) ¹⁾
   ¹⁾ Die zu verwendende Menge an Prohexadion-Calcium techn. ist abhängig vom tatsächlichen Wirkstoffgehalt. Fluktuationen im Wirkstoffgehalt wurden ggf. über die Zugabe von Ammoniumsulfat ausgeglichen.

Die Suspension wurde für 30 Minuten gerührt, und anschließend im Rücklaufverfahren mit einer Rotor/Stator Mühle (PUC oder Siefer) gemahlen. Nach Beendigung des Vormühlvorganges wurde die Suspension in das nächste Gefäß überführt. Dort wurde ein Kugelmühlverfahren (Kugelgröße 0.8 - 1.2 mm) durchgeführt, um die finale Partikelgröße (d50 < 2 µm, d90 < 10 µm) zu erhalten.

### B) Wirbelschichtgranulierung:

Die Granulierung wurde im Batch-Verfahren durchgeführt. Die benötigte Menge an Ammoniumsulfat wurde als Startmaterial in den Wirbeschichtgranulator eingebracht, d.h. als Wirbelbett vorgelegt.

Anschließend wurde die Prohexadion-Calcium-Sprühsuspension (35% Feststoffgehalt) aus zwei Düsen von oben in das Wirbelbett eingesprüht und mit heißer Luft getrocknet. Die Sprühsuspension wurde gleichmäßig gerührt, um Homogenität zu gewährleisten.

Die Sprührate und die Position der Düsen kann variiert werden, um grobe Agglomerationen und die Bildung von Bildung von Klumpen zu verhindern.

Die Granulierung wurde unter folgenden Bedingungen durchgeführt:

| | |
|---|---|
| Lufteinstromtemperatur: | 100 - 130°C |
| Produkttemperatur: | 60 - 80°C |

Die Lufteinstromtemperatur darf 150°C nicht übersteigen, um den Wirkstoff nicht zu beschädigen.

### C) Sieben des Endproduktes:

Nach Beendigung der Wirbelschichtgranulierung wurden die Partikel aus dem Wirbelbett gekühlt und zu einer Größe von 2.0 mm - 0.3 mm gesiebt, um das Endprodukt zu erhalten.

### Beispiel 2

### Verfahren zur Wirbelschichtgranulierung gem. der vorliegenden Erfindung (Batch 400131)

### A) Herstellung einer Prohexadion-Ca Sprühsuspension:

Jeder Verfahrensschritt wurde unter geeigneter Kühlung durchgeführt, um sicherzustellen, dass die Temperatur der Sprühsuspension 30°C nicht übersteigt.

Zur Herstellung der Sprühsuspension (35% Feststoffgehalt) wurden die folgenden Komponenten in einen Rührkessel eingebracht:
- Wasser
- Dispersionsagenzien, Benetzungsmittel, Trägerstoffe, Entschäumer
- Prohexadion-Ca techn. (ca. 94.5%) ¹⁾
¹⁾ Die zu verwendende Menge an Prohexadion-Calcium techn. ist abhängig vom tatsächlichen Wirkstoffgehalt. Fluktuationen im Wirkstoffgehalt wurden ggf. über die Zugabe von Ammoniumsulfat ausgeglichen.

Die Suspension wurde für 30 Minuten gerührt, und anschließend im Rücklaufverfahren mit einer Rotor/Stator Mühle (PUC oder Siefer) gemahlen. Nach Beendigung des Vormühlvorganges wurde die Suspension in das nächste Gefäß überführt. Dort wurde ein Kugelmühlverfahren (Kugelgröße 0.8 - 1.2 mm) durchgeführt, um die finale Partikelgröße (d50 < 2 µm, d90 < 10 µm) zu erhalten.

### B) Herstellung einer Ammoniumsulfat-Sprühlösung:

Die benötigte Menge an Ammoniumsulfat wurde in Wasser aufgelöst. Die Konzentration der Sprühlösung ist dabei nahe am Sättigungspunkt der Lösung für Ammoniumsulfat (d.h. Ammoniumsulfat in Wasser).

### C) Wirbelschichtgranulierung:

Die Granulierung wurde kontinuierlich durchgeführt (kann aber optional auch im Batch-Verfahren durchgeführt werden).

Die Prohexadion-Calcium-Sprühsuspension (35% Feststoffgehalt) wurde aus einer oder zwei Düsen und die Ammoniumsulfat-Sprühlösung wurde aus eine oder zwei Düsen das Wirbelbett eingesprüht und mit heißer Luft getrocknet.

Die Sprühsuspension wurde gleichmäßig gerührt, um Homogenität zu gewährleisten.

Die Sprührate und die Position sowie die Anzahl der Düsen kann variiert werden, um grobe Agglomerationen und die Bildung von Bildung von Klumpen zu verhindern.

Die Granulierung wurde unter folgenden Bedingungen durchgeführt:

| | |
|---|---|
| Lufteinstromtemperatur: | 100 - 130°C |
| Produkttemperatur: | 60 - 80°C |

Die Lufteinstromtemperatur darf 150°C nicht übersteigen, um den Wirkstoff nicht zu beschädigen.

### D) Sieben des Endproduktes:

Nach Beendigung der Wirbelschichtgranulierung wurden die Partikel aus dem Wirbelbett gekühlt und zu einer Größe von 2.0 mm - 0.3 mm gesiebt, um das Endprodukt zu erhalten.

### Beispiel 3

### Charakterisierung und Vergleich der in Beispiel 1 und 2 erhaltenen wasserdispergierbaren Granulate

| **Gemessener Parameter** | **Analyseverfahren** | **Batch 400126** | **Batch 400131** | **Kommentar** |
|---|---|---|---|---|
| | | **Erzeugt gem. Prozess aus SdT (Bsp. 1)** | **Erzeugt gem. Prozess gem. Erfindung (Bsp. 2)** | |
| H₂O-Gehalt bei 100°C | IR-Trockner 80°C | 0,60% | 0,80% | |
| visuelle Beurteilung | | Homogenes WG | Homogenes WG | |
| | | Frei fließend | Frei fließend | |
| Dispersionsstab. 0,4% | CIPAC MT 180 | 0,15ml | 0,1ml | Unterschied **nicht signifikant** |
| Korngröße D50 | Malvern | 4,6 | 5,1 | Unterschied **nicht signifikant** |
| Korngröße D90 | Malvern | 10 | 12,8 | Unterschied **nicht signifikant** |
| pH-Wert 1 %ig | CIPAC MT 75 | 2,3 | 2,7 | Unterschied **nicht signifikant** |

| Dispergierfähigkeit in Cipac Wasser D bei **+20°C** | | | | |
|---|---|---|---|---|
| Rührzeit 300 U/min. | CIPAC MT 175 | | | |
| Dispergiert nach 1 min. Rühren | | 94% | 90% | Unterschied **nicht signifikant** |

| Dispergierfähigkeit in Cipac Wasser D bei **+5°C** | | | | Praxisanwendung im Frühjahr (niedrige Temperaturen) |
|---|---|---|---|---|
| Rührzeit 300 U/min. | CIPAC MT 175 | | | |
| Dispergiert nach 1 min. Rühren. | | 67% | 82% | Unterschied **signifikant** |

Die in Tabelle 3 aufgeführten Untersuchungsergebnisse aus Vergleichsanalysen der Granulate aus dem Stand der Technik (Batch 400126) und gem. der vorliegenden Erfindung (Batch 400131) zeigen, dass die beiden aus den unterschiedlichen Herstellungsverfahren gewonnenen Granulate in weiten Bereichen vergleichbare Dispergiereigenschaften aufweisen.

Im Unterschied zum Granulat hergestellt nach dem bisherigen Verfahren, zeigt das nach dem erfindungsgemäßen Verfahren hergestellte Granulat jedoch eine signifikante Erhöhung der Dispergierfähigkeit bei niedrigen Temperaturen von etwa + 5°C. Hier ist das nach dem erfindungsgemäßen Verfahren hergestellte Granulat durch seine spezielle Matrixstruktur bereits nach 1 min zu mehr als 80% dispergiert, während das nach dem bisherigen Verfahren hergestellte Granulat (Kern/Schale - Struktur) erst zu 67% dispergiert ist.

Dies bietet den Vorteil, dass das Granulat unter Frühjahrsbedingungen (mit kalten Wasser- und Außentemperaturen im Bereich von etwa 5°C) sehr viel schneller dispergiert werden kann, als das auf herkömmlichem Wege erzeugte Granulat. Dies vereinfacht die Anwendung durch eine signifikant verkürzte Vorbereitungszeit in der Praxisanwendung.

## Patentansprüche

1. Verfahren zur Herstellung eines Granulats enthaltend Prohexadion-Calcium und ein anorganisches Sulfat umfassend die Wirbelschichtgranulierung einer wässrigen Dispersion umfassend Prohexadion-Calcium und einer wässrigen Lösung umfassend mindestens ein anorganisches Sulfat.

2. Verfahren nach Anspruch 1, wobei die Prohexadion-Calcium Dispersion und die Lösung des anorganischen Sulfats getrennt in eine Wirbelschichtkammer eingebracht werden.

3. Verfahren nach Anspruch 1 oder 2, wobei die Prohexadion-Calcium Dispersion und die Lösung des anorganischen Sulfats gleichzeitig in eine Wirbelschichtkammer eingebracht werden.

4. Verfahren nach einem der Ansprüche 1 bis 3, wobei die Prohexadion-Calcium Dispersion höchstens 5 Gew. % anorganisches Sulfat enthält.

5. Verfahren nach einem der Ansprüche 1 bis 4, wobei das anorganische Sulfat Ammoniumsulfat oder ein Hydrogensulfat ist, vorzugsweise Natriumhydrogensulfat oder Kaliumhydrogensulfat.

6. Homogenes Granulat umfassend anorganisches Sulfat und Prohexadion-Calcium, wobei das anorganische Sulfat und das Prohexadion-Calcium gleichmäßig im Granulat verteilt sind und das Granulat eine poröse Matrixstruktur aufweist.

7. Homogenes Granulat nach Anspruch 6, wobei das anorganische Sulfat Ammoniumsulfat oder ein Hydrogensulfat ist, vorzugsweise Natriumhydrogensulfat oder Kaliumhydrogensulfat.

8. Homogenes Granulat nach Anspruch 6 oder 7, umfassend ein weiteres Pestizid.

9. Homogenes Granulat nach Anspruch 8, wobei das weitere Pestizid ein Wachstumsregulator ist.

10. Homogenes Granulat nach einem der Ansprüche 6 bis 9, umfassend ein Säuerungsmittel.

11. Homogenes Granulat nach einem der Ansprüche 6 bis 10 umfassend:
1 bis 30 Gew. % Prohexadion-Calcium;
10 bis 60 Gew. % Ammoniumsulfat;
optional 1 bis 50 Gew. % weiteres Pestizid,
ad 100 Gew. % Formulierungshilfsmittel; und
optional ein Säuerungsmittel.

12. Homogenes Granulat gemäß Anspruch 6, erhältlich gemäß dem Verfahren nach einem der Ansprüche 1 bis 5.

13. Verwendung des homogenen Granulats nach einem der Ansprüche 6 bis 11 oder hergestellt gemäß dem Verfahren nach einem der Ansprüche 1 bis 5 zur Herstellung einer Spritzbrühe.

14. Verwendung des homogenen Granulats nach einem der Ansprüche 6 bis 11 oder hergestellt nach dem Verfahren gemäß einem der Ansprüche 1 bis 5 zur Regulierung des Wachstums von Pflanzen.

## Claims

1. A process for producing a granular material comprising prohexadione-calcium and an inorganic sulfate, comprising the fluidized bed granulation of an aqueous dispersion comprising prohexadione-calcium and an aqueous solution comprising at least one inorganic sulfate.

2. The process according to claim 1, wherein the prohexadione-calcium dispersion and the solution of the inorganic sulfate are introduced separately into a fluidized bed chamber.

3. The process according to claim 1 or 2, wherein the prohexadione-calcium dispersion and the solution of the inorganic sulfate are introduced simultaneously into a fluidized bed chamber.

4. The process according to any of claims 1 to 3, wherein the prohexadione-calcium dispersion comprises not more than 5% by weight of inorganic sulfate.

5. The process according to any of claims 1 to 4, wherein the inorganic sulfate is ammonium sulfate or a hydrogensulfate, preferably sodium hydrogensulfate or potassium hydrogensulfate.

6. A homogeneous granular material comprising inorganic sulfate and prohexadione-calcium, wherein the inorganic sulfate and the prohexadione-calcium are distributed homogeneously in the granular material and the granular material has a porous matrix structure.

7. The homogeneous granular material according to claim 6, wherein the inorganic sulfate is ammonium sulfate or a hydrogensulfate, preferably sodium hydrogensulfate or potassium hydrogensulfate.

8. The homogeneous granular material according to claim 6 or 7, comprising a further pesticide.

9. The homogeneous granular material according to claim 8, wherein the further pesticide is a growth regulator.

10. The homogeneous granular material according to any of claims 6 to 9, comprising an acidifier.

11. The homogeneous granular material according to any of claims 6 to 10 comprising:
1% to 30% by weight of prohexadione-calcium;
10% to 60% by weight of ammonium sulfate;
optionally 1% to 50% by weight of further pesticide,
ad 100% by weight formulation auxiliaries; and optionally an acidifier.

12. The homogeneous granular material according to claim 6, obtainable by the process according to any of claims 1 to 5.

13. The use of the homogeneous granular material according to any of claims 6 to 11 or produced by the process according to any of claims 1 to 5 for production of a spray liquor.

14. The use of the homogeneous granular material according to any of claims 6 to 11 or produced by the process according to any of claims 1 to 5 for regulation of the growth of plants.

## Revendications

1. Procédé de fabrication d'un granulat contenant de la prohexadione-calcium et un sulfate inorganique, comprenant la granulation en lit fluidisé d'une dispersion aqueuse comprenant de la prohexadione-calcium et d'une solution aqueuse comprenant au moins un sulfate inorganique.

2. Procédé selon la revendication 1, dans lequel la dispersion de prohexadione-calcium et la solution du sulfate inorganique sont introduites séparément dans une chambre à lit fluidisé.

3. Procédé selon la revendication 1 ou 2, dans lequel la dispersion de prohexadione-calcium et la solution du sulfate inorganique sont introduites simultanément dans une chambre à lit fluidisé.

4. Procédé selon l'une quelconque des revendications 1 à 3, dans lequel la dispersion de prohexadione-calcium contient au plus 5 % en poids de sulfate inorganique.

5. Procédé selon l'une quelconque des revendications 1 à 4, dans lequel le sulfate inorganique est le sulfate d'ammonium ou un hydrogénosulfate, de préférence l'hydrogénosulfate de sodium ou l'hydrogénosulfate de potassium.

6. Granulat homogène comprenant un sulfate inorganique et de la prohexadione-calcium, le sulfate inorganique et la prohexadione-calcium étant répartis uniformément dans le granulat et le granulat présentant une structure de matrice poreuse.

7. Granulat homogène selon la revendication 6, dans lequel le sulfate inorganique est le sulfate d'ammonium ou un hydrogénosulfate, de préférence l'hydrogénosulfate de sodium ou l'hydrogénosulfate de potassium.

8. Granulat homogène selon la revendication 6 ou 7, comprenant un pesticide supplémentaire.

9. Granulat homogène selon la revendication 8, dans lequel le pesticide supplémentaire est un régulateur de croissance.

10. Granulat homogène selon l'une quelconque des revendications 6 à 9, comprenant un acidifiant.

11. Granulat homogène selon l'une quelconque des revendications 6 à 10, comprenant :
1 à 30 % en poids de prohexadione-calcium ;
10 à 60 % en poids de sulfate d'ammonium ;
éventuellement 1 à 50 % en poids d'un pesticide supplémentaire ;
jusqu'à 100 % en poids d'adjuvants de formulation ; et éventuellement un acidifiant.

12. Granulat homogène selon la revendication 6, pouvant être obtenu par le procédé selon l'une quelconque des revendications 1 à 5.

13. Utilisation du granulat homogène selon l'une quelconque des revendications 6 à 11 ou fabriqué par le procédé selon l'une quelconque des revendications 1 à 5 pour la fabrication d'une bouillie de pulvérisation.

14. Utilisation du granulat homogène selon l'une quelconque des revendications 6 à 11 ou fabriqué par le procédé selon l'une quelconque des revendications 1 à 5 pour la régulation de la croissance de plantes.
